(19) Europäisches Patentamt / European Patent Office / Office européen des brevets

(11) **EP 4 372 629 B1**

(12) **EUROPEAN PATENT SPECIFICATION**

(45) Date of publication and mention
of the grant of the patent:
**22.10.2025 Bulletin 2025/43**

(21) Application number: **22306685.3**

(22) Date of filing: **16.11.2022**

(51) International Patent Classification (IPC):
**G06N 10/40** $^{(2022.01)}$

(52) Cooperative Patent Classification (CPC):
**G06N 10/40**

(54) **MEASUREMENT METHODS FOR A RESONANT CAT-QUBIT CIRCUIT**

MESSVERFAHREN FÜR EINE RESONANTE CAT-QUBIT-SCHALTUNG

PROCÉDÉS DE MESURE POUR UN CIRCUIT À QUBIT CAT RÉSONANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**22.05.2024 Bulletin 2024/21**

(73) Proprietor: **Alice & Bob
75015 Paris (FR)**

(72) Inventor: **LESCANNE, Raphaël
75015 Paris (FR)**

(74) Representative: **Cabinet Netter
36, avenue Hoche
75008 Paris (FR)**

(56) References cited:
- **ANTOINE ESSIG ET AL: "Multiplexed photon number measurement", ARXIV.ORG, CORNELL UNIVERSITY LIBRARY, 201 OLIN LIBRARY CORNELL UNIVERSITY ITHACA, NY 14853, 9 January 2020 (2020-01-09), XP081575997**
- **RONAN GAUTIER ET AL: "Combined Dissipative and Hamiltonian Confinement of Cat Qubits", ARXIV.ORG, CORNELL UNIVERSITY LIBRARY, 201 OLIN LIBRARY CORNELL UNIVERSITY ITHACA, NY 14853, 24 January 2022 (2022-01-24), XP091131098**
- **J\'ER\'EMIE GUILLAUD ET AL: "Quantum computation with cat qubits", ARXIV.ORG, CORNELL UNIVERSITY LIBRARY, 201 OLIN LIBRARY CORNELL UNIVERSITY ITHACA, NY 14853, 25 August 2022 (2022-08-25), XP091301867**

**Description**

The present disclosure relates to the field of quantum technologies, and more specifically to a method for measuring qubits in a superconducting quantum circuit.

There has been growing attention in recent years for developing quantum technologies for several applications, such as quantum computation and communication. Superconducting quantum circuits are a promising platform to realize quantum computer and among them the so-called cat-qubits that are stored in superconducting resonators are one interesting candidate.

A cat-qubit is defined as a specifically selected two-dimensional sub-manifold of a main manifold spanned by several coherent states. As an example, the two-component cat-qubit main manifold is the span of two coherent states with equal amplitude and opposite phase; the main manifold being two-dimensional, in that case the sub-manifold is equal to the main manifold. As another example, the four-component cat-qubit main manifold is the span of four coherent states with equal amplitudes and phases shifted by 90° from one another. The two-dimensional sub-manifold is chosen as the even photon number parity sub-manifold. To generalize, the 2N-component cat-qubit main-manifold is the span of 2N coherent states with equal amplitudes and phase shifted by $\pi/N$ from one another. The two-dimensional sub-manifold is chosen as the 0 modulo N photon number sub-manifold. An example cat-qubits has been studied in the following article:

- "Combined Dissipative and Hamiltonian Confinement of Cat Qubits", Gautier R. et al, PRX Quantum, 2021.

In this context, superconducting quantum circuits maybe engineered to exhibit specific quantum dynamics, such as stabilizing a quantum manifold of coherent states. The stabilization of a quantum manifold of two coherent states by dissipation has been studied notably in the following articles:

- "Exponential suppression of bit-flips in a qubit encoded in an oscillator", Lescanne R. et. Al., Nature Physics, 2020;
- "Coherent Oscillations inside a Quantum Manifold Stabilized by Dissipation", Touzard S. et. Al.; Physical Review X, 2018; and
- "Confining the state of light to a quantum manifold by engineered two-photon loss". Leghtas Z. et. Al., Science, 2015.

The stabilization of 2N coherent states requires to engineer a non-linear conversion between 2N-photons of a first mode that hosts the stabilized quantum manifold, this mode is also called the cat-qubit mode and one photon of a second mode known as buffer mode and conversely. To achieve the non-linear conversion, existing solutions comprise applying external time-varying excitations on the superconducting quantum circuit, in the form of one or more microwave tones at specific frequencies called parametric pumps so as to bridge the energy gap between the energy of 2N photons of the first mode and one photon of the second mode. These solutions are also known as parametric pumping techniques.

The Applicant has disclosed in patent application EP21306965.1 a family of superconducting quantum circuits in which the resonant frequency of the second mode is substantially 2N times the resonant frequency of the first mode when a predetermined current of a constant intensity is applied to the circuit. This provides for what will be hereinafter referred to as "resonant cat-qubit circuits" and "resonant cat-qubits", as the 2N-to-1 photon conversion does not require parametric pumping to bridge the energy gap of the process. Once this non-linear conversion process is enabled, the coherent state manifold is stabilized by coupling the second mode (or "buffer mode") to an environment comprising a microwave source that drives it at resonance and a load that makes the second mode dissipative. This single-photon drive gets converted into a 2N-photon drive on the first mode or cat-qubit mode by the non-linear conversion process. In the same manner, the single-photon loss gets converted into 2N-photon loss on the cat-qubit mode.

While allowing to forego the use of parametric pumping techniques is extremely advantageous, the implementation of the resonant cat-qubit circuits introduces new challenges in the measurement of the cat-qubits.

In previous implementations, the state of the cat-qubit mode is determined by measuring the Wigner function. This measurement is most often based on the dispersive interaction between the cat-qubit mode and a two-level system. The dispersive interaction embedded within a Ramsey sequence on the two-level system enables to measure the parity of the field. Conventional Wigner function measurement in the context of superconducting circuits is described in the article by Sun, L., Petrenko, A., Leghtas, Z. et al. "Tracking photon jumps with repeated quantum non-demolition parity measurements", Nature 511, 444-448 (2014), https://doi.org/10.1038/nature13436.

Dispersive coupling is inhibited by the coherent states stabilization. Hence the Wigner function cannot be measured while the main manifold is stabilized. In previous implementations of stabilized cat-qubits involving parametric pumping techniques, the Wigner function is measured after the stabilization process is neutralized by turning off the parametric pump that enables the 2N-to-1 photon conversion between the cat-qubit mode and the buffer mode. This can be done almost instantaneously (tens of ns) thanks to the large bandwidth of the microwave lines.

This is however not possible in the context of resonant cat-qubits. Indeed, since the stabilization is self-sustaining, there is no parametric pump to turn-off. The only comparable prior art situation lies with the case of Kerr-cat qubits as discussed in Grimm, A., Frattini, N.E., Puri, S. et al. "Stabilization and operation of a Kerr-cat qubit", Nature 584, 205-209 (2020), https://doi.org/10.1038/s41586-020-2587-z. However, in this situation, the nature of the Kerr-cat qubit confinement induces significant differences as will be discussed further below. Further techniques for measuring quantum states of superconducting qubits are disclosed at

- "Multiplexed photon number measurement", Essig A., Ficheux Q. et al, Physical. Review X 11, 031045, August 27th, 2025.

The invention aims at improving the situation. To that end, the Applicant provides a quantum measurement method for a device comprising a non-linear superconducting quantum circuit having a first mode and a second mode each having a respective resonant frequency and a symbolic representation which comprises at least one loop that includes one or more Josephson junctions,

said non-linear superconducting quantum circuit being configured such that, when a predetermined current of a constant intensity is applied, the resonant frequency of the second mode is substantially 2N times the resonant frequency of the first mode, a phase difference is induced across the one or more Josephson junctions, such that the non-linear superconducting quantum circuit has an Hamiltonian expandable into a sum between at least a dominant term of the form $\hbar g_{2N} a^{2N} b^{\dagger} + \hbar g_{2N}^* a^{\dagger 2N} b$  and a series of subsidiary terms, where $g_{2N}$ is a scalar corresponding to the intrinsic coupling strength, $a$ is the annihilation operator of the first mode, $b$ is the annihilation operator of the second mode, and $\hbar$ is the reduced Planck constant, thereby performing intrinsically a resonant 2N-to-1 photon exchange between respectively the first mode and the second mode, N being a positive integer, and said device further comprising a current source configured to provide said predetermined current of a constant intensity, a microwave source configured to apply a microwave radiation at a frequency substantially equal to the resonant frequency of the second mode or 2N times the resonant frequency of the first mode and coupled to said non-linear superconducting quantum circuit to drive said second mode, and a load coupled substantially only to said second mode,
the method comprising the following operations:

1) turning off the drive of said second mode,

2) pausing for a duration comprised between $\left[ \frac{1}{\kappa_{2N}} ; \frac{10}{\kappa_{2N}} \right]$ s, where $\kappa_{2N}$ is the rate of the 2N-photon dissipation of said non-linear superconducting circuit in rad.s$^{-1}$,

3) performing a quantum measurement to determine a property of the photon number distribution on the first mode of the circuit.

According to various embodiments, the method may comprise one or more of the following features:

- operation 1) comprises applying a square pulse shape to bringing the amplitude drive from its nominal stabilization value to 0,
- operation 1) comprises applying two consecutive square pulse shapes, the first one bringing said the amplitude drive from its nominal stabilization value to a negative value substantially equal or greater than the nominal stabilization absolute value, and the second one bringing the current from this value to 0,
- operation 3) is a quantum nondemolition measurement, and further comprising the following operation: 4) restoring the drive of said second mode after operation 3) is performed,
- operation 4) comprises applying a square pulse shape to bring the amplitude drive from 0 to the nominal stabilization value,
- operation 4) comprises applying two consecutive square pulse shapes, the first one bringing said amplitude drive from 0 to a value substantially comprised between one and ten times the nominal stabilization value, and the second one bringing amplitude drive from this value to the nominal stabilization value,
- the method further comprises the following operation: 0) applying on the first mode an electromagnetic pulse having a frequency substantially equal to the resonant frequency of the first mode which has an amplitude superior to $\kappa_{2N}$ and a duration lesser than $1/\kappa_{2N}$,
- operation 0) is performed before operation 1), and
- operation 0) and operation 1) are performed concurrently.

The invention also concerns a quantum tomography method, comprising the following operations:

a) obtaining a set of complex displacements defining a displacement amplitude and a displacement phase scanning the phase space of the cat-qubit mode,

b) preparing a state in the cat-qubit mode based on a chosen set of parameters for the operation of a device comprising a non-linear superconducting quantum circuit having a first mode and a second mode each having a respective resonant frequency and a symbolic representation which comprises at least one loop that includes one or more Josephson junctions,

said non-linear superconducting quantum circuit being configured such that, when a predetermined current of a constant intensity is applied, the resonant frequency of the second mode is substantially 2N times the resonant frequency of the first mode, a phase difference is induced across the one or more Josephson junctions, such that the non-linear superconducting quantum circuit has an Hamiltonian expandable into a sum between at least a dominant term of the form $\hbar g_{2N} a^{2N} b^{\dagger} + \hbar g_{2N}^{*} a^{\dagger 2N} b$ and a series of subsidiary terms, where $g_{2N}$ is a scalar corresponding to the intrinsic coupling strength, $a$ is the annihilation operator of the first mode, b is the annihilation operator of the second mode, and $\hbar$ is the reduced Planck constant, thereby performing intrinsically a resonant 2N-to-1 photon exchange between respectively the first mode and the second mode, N being a positive integer, and

said device further comprising a current source configured to provide said predetermined current of a constant intensity, a microwave source configured to apply a microwave radiation at a frequency substantially equal to the resonant frequency of the second mode or 2N times the resonant frequency of the first mode and coupled to said non-linear superconducting quantum circuit to drive said second mode, and a load coupled substantially only to said second mode,

c) for a given complex displacement in the set of complex displacements, applying the method of one of claims 7 to 9 using the associated displacement amplitude and displacement phase to define the amplitude, the duration and the phase of the electromagnetic pulse of step 0),

d) repeating operation b) and operation c) with a different complex displacement.

The invention also concerns a quantum device operation tuning method comprising:

a) obtaining a plurality of set of parameters for the operation of a quantum device,
b) for each set of parameters of operation a), performing the method of the invention, and
c) deriving a tuned set of parameters based on the results of operation b).

The invention also concerns a quantum computing device comprising a non-linear superconducting quantum circuit having a first mode and a second mode each having a respective resonant frequency and a symbolic representation which comprises at least one loop that includes one or more Josephson junctions,

said non-linear superconducting quantum circuit being configured such that, when a predetermined current of a constant intensity is applied, the resonant frequency of the second mode is substantially 2N times the resonant frequency of the first mode, a phase difference is induced across the one or more Josephson junctions, such that the non-linear superconducting quantum circuit has an Hamiltonian expandable into a sum between at least a dominant term of the form $\hbar g_{2N} a^{2N} b^{\dagger} + \hbar g_{2N}^{*} a^{\dagger 2N} b$ and a series of subsidiary terms, where $g_{2N}$ is a scalar corresponding to the intrinsic coupling strength, $a$ is the annihilation operator of the first mode, $b$ is the annihilation operator of the second mode, and $\hbar$ is the reduced Planck constant, thereby performing intrinsically a resonant 2N-to-1 photon exchange between respectively the first mode and the second mode, N being a positive integer, and said device further comprising a current source configured to provide said predetermined current of a constant intensity, a microwave source configured to apply a microwave radiation at a frequency substantially equal to the resonant frequency of the second mode or 2N times the resonant frequency of the first mode and coupled to said non-linear superconducting quantum circuit to drive said second mode, and a load coupled substantially only to said second mode,

wherein said device is operated using a tuned set of parameters determined by the method of the invention.

The invention also concerns a quantum computing device comprising a non-linear superconducting quantum circuit having a first mode and a second mode each having a respective resonant frequency and a symbolic representation which comprises at least one loop that includes one or more Josephson junctions,

said non-linear superconducting quantum circuit being configured such that, when a predetermined current of a constant intensity is applied, the resonant frequency of the second mode is substantially 2N times the resonant frequency of the first mode, a phase difference is induced across the one or more Josephson junctions, such that the non-linear superconducting quantum circuit has an Hamiltonian expandable into a sum between at least a dominant term of the form $\hbar g_{2N} a^{2N} b^{\dagger} + \hbar g_{2N}^{*} a^{\dagger 2N} b$ and a series of subsidiary terms, where $g_{2N}$ is a scalar corresponding to the intrinsic coupling strength, $a$ is the annihilation operator of the first mode, $b$ is the annihilation operator of the second mode, and $\hbar$ is the reduced Planck constant, thereby performing intrinsically a resonant 2N-to-1 photon exchange between respectively the first mode and the second mode, N being a positive integer, and said device further comprising a current source configured to provide said predetermined current of a constant intensity, a microwave source configured to apply a microwave radiation at a frequency substantially equal to the resonant frequency of the second mode or 2N times the resonant frequency of the first mode and coupled to said non-linear superconducting quantum circuit to drive said second mode, and a load coupled substantially only to said second mode,

wherein said device performs the method of the invention.

Non-limiting examples will now be described in reference to the accompanying drawings on which:

- Figure 1 illustrates how a resonant cat-qubit circuit is incorporated in a device to stabilize quantum information,
- Figure 2 illustrates various examples of circuits used to isolate the first mode from the environment,
- Figure 3 illustrates examples of how to use the resonant cat-qubit circuit incorporated in a device to stabilize quantum information,
- Figures 4a and 4b illustrate how the current is tuned to reach the frequency matching condition,
- Figure 5 illustrates several examples of circuit symbolic representations alternatively used throughout the specification,
- Figure 6 illustrates a first embodiment of the device of Figure 1,
- Figure 7 illustrates another embodiment of the device of Figure 1,
- Figure 8 illustrates another embodiment of the device of Figure 1,
- Figure 9 illustrates experimental data that were obtained with an example of the resonant cat-qubit circuit of Figure 8,
- Figure 10 illustrates a diagram of a quantum measurement method according to the invention,
- Figure 11 illustrates various microwave source ramp up and ramp down embodiments for turning off or on the drive of the second mode,
- Figure 12 illustrates the no-drive manifold, and
- Figure 13 illustrates an alternative embodiment of a quantum measurement method according to the invention.

Prior to describing the measurement method according to the invention, the Applicant will describe the resonant cat-qubit and the underlying principles. This will help to better understand the nature of the resonant cat-qubit circuits, why their stabilization is unique and causes unique challenges.

First, the context of the resonant cat-qubit will be explained.

For a resonant cat-qubit to be realized, a non-linear superconducting quantum circuit having a first mode and a second mode is provided. Each of the first mode and the second mode has a respective resonant frequency. The circuit is configured such that the resonant frequency of the second mode is substantially 2N times the resonant frequency of the first mode when a predetermined current of a constant intensity is applied to the circuit. The circuit thus performs intrinsically a resonant 2N-to-1 photon exchange between respectively the first mode and the second mode. N is a positive integer (that is, N is any positive integer larger than or equal to 1), and thus 2N is an even number, e.g., 2, 4, 6 or more. Hence, the expression "2N photons" means a discrete and even quantity of photons defined by the integer 2N.

Such a superconducting quantum circuit improves the resonant 2N-to-1 photon exchange between respectively the first mode and the second mode. Indeed, in the superconducting quantum circuit, the resonant frequency of the second mode is substantially 2N times the resonant frequency of the first mode when a predetermined current of a constant intensity is applied to the circuit. This contrasts with the known dissipation-based cat-qubit realizations, where external time-varying excitations such as those performed by parametric pumping techniques are used to bridge the gap between the frequencies of the two modes and perform the resonant 2N-to-1 photon exchange. The external time-varying excitation used in such prior art relaxes the constraint on the modes frequencies but induces undesired effects such as heating the modes. This heating reduces coherence times of the circuit and causes instabilities of the dynamics. This results in that any non-linear mixing, including the resonant 2N-to-1 photon exchange is ultimately destroyed. In this respect, the absence of external time-varying excitation enables increasing the rate of the resonant 2N-to-1 photon exchange by one or two orders of magnitude compared to prior art.

The first mode and the second mode of the superconducting quantum circuit may each correspond to natural resonance frequencies of the circuit. For example, each of the first mode and the second mode may be either an electromagnetic mode or a mechanical mode. Each of the first mode and the second mode may have a respective natural resonance frequency. For example, the first mode (respectively the second mode) may be a mechanical mode and the second mode may be an electromagnetic mode (respectively the first mode being an electromagnetic mode). The first mechanical mode and the second electromagnetic mode may be coupled in the circuit via piezo-electric effect. Each of the first mode and the second mode may have a respective resonant frequency, e.g., the first mode may have a resonant frequency of the type $f_a = \frac{\omega_a}{2\pi}$ and the second mode may have a resonant frequency of the type $f_b = \frac{\omega_b}{2\pi}$, where $\omega_a$ and $\omega_b$ may be the angular frequencies of each respective mode. By "having" a first mode and a second mode, it is meant that the superconducting quantum circuit may comprise components operating in a superconducting regime which host the modes independently of each other or concurrently. In other words, the first mode and the second mode may be hosted in different subsets of components of the superconducting circuit or (alternatively) on the same subset of components.

The superconducting quantum circuit may be operated at temperatures close to absolute zero (e.g., 100 mK or less, typically 10 mK), and isolated as much as possible from the environment to avoid energy loss and decoherence, except for some tailored couplings. For example, only the second mode may be coupled to a dissipative environment, while the first mode may remain isolated from the environment.

The superconducting quantum circuit may be manufactured as one or more patterned layers of superconducting material (e.g., aluminum, tantalum, niobium among others, as known in the art) deposited on a dielectric substrate (e.g., silicon, sapphire among others). Each of the one or more patterned layers may define lumped element resonators. A capacitive element may be formed (on a respective layer of the one or more patterned layers) with two neighboring plates of superconducting material. An inductive element may be formed with a superconducting wire. Alternatively, at least one of the one or more patterned layers may define portions of transmission lines each resonating at a frequency which depends on their length. The transmission lines may be, for example, co-planar wave guides or microstrip lines. Yet alternatively, the circuit may be embedded in a 3D architecture which comprises high quality 3D modes machined or micro-machined into bulk superconductor that can be used as any of the two modes.

The non-linear circuit and the predetermined current of a constant intensity are configured such that, when said predetermined current is applied to the circuit, the resonant frequency of the second mode of the circuit is substantially 2N times the resonant frequency of the first mode (also called a "frequency matching condition" of the form $2Nf_a = f_b$, $f_a$ being the resonant frequency of the first mode and $f_b$ being the resonant frequency of the second mode, or equivalently of the form $2N\omega_a = \omega_b$).

In other words, the predetermined current is an external current which induces an internal DC (direct current) bias to the circuit. The internal current is adapted so that the components/hardware forming the circuit are in a specific regime: namely, that the respective resonant frequency of the second mode - also called second resonant frequency- of the circuit is substantially 2N times the respective resonant frequency of the first mode - also called first resonant frequency. Thus, the non-linearity of the circuit performs intrinsically the resonant 2N-to-1 photon exchange that destroys 2N photons in the first mode at the first resonant frequency while creating one photon in the second mode at the second resonant frequency, and conversely destroys one photon in the second mode at the second resonant frequency while creating 2N photons in the first mode at the first resonant frequency. Indeed, the resonant 2N-to-1 photon exchange may be performed at a given rate, hereinafter denoted $g_{2N}$. The exchange of photons among the two modes may be mediated via elements (e.g., non-linear elements) of the circuit. The predetermined current is applied so that the frequency matching condition of the type $2N\omega_a = \omega_b$ occurs, and so that the circuit performs the resonant 2N-to-1 photon exchange dynamics. The predetermined current at which the frequency matching condition is reached is also called the bias point of the circuit. The bias point may also be called an optimal bias point if the choice of the circuit parameters makes spurious dynamics vanish at the frequency matching condition, as shown in examples below.

The predetermined current may be applied directly - that is, galvanically - to the circuit so that it flows through at least a subset of elements of the circuit and gets divided in the various possible branches. The currents that flow in the branches of the circuit are called internal currents and are determined according to Kirchhoff's current laws. In various examples, the predetermined current may be applied directly via a current source, connected to the circuit. In various examples, the circuit may have a planar geometry, and thus the path of the predetermined current merges with a portion of the superconducting loop in the same planar geometry, e.g., an on-chip current path.

Alternatively, the predetermined current may be applied indirectly, that is, an internal current may be induced in the circuit through a mutual inductance, for example with a coil. In other words, an external inductance is inductively coupled to the circuit via a shared mutual inductance to induce a current in the circuit so that it flows through at least a subset of elements of the circuit. Thus, the internal current is the current induced into the circuit via the mutual inductance. Since there is no need for a direct (galvanic) connection with the circuit, the predetermined current path may be either on the same level as the circuit or made of an external coil above or below the circuit, the axis of which being perpendicular to the superconducting circuit plane. In various examples, when the mutual inductance is shared with a coil, the later may be formed with multiple turns of a material that allows the circulation of current in order to generate of a magnetic field. The coil may be made of any number of coils needed; this increases the mutual inductance. The coil may be made of any material that allows circulation of current to generate a magnetic field and in turn induce the internal current. For instance, the coil may be made of a superconducting material or a non-superconducting material. Alternatively, the coil may be replaced by a permanent magnet that directly generates a constant magnetic field. However, this makes the tuning of the magnetic field unpractical.

The application of the predetermined current results in an internal current $I_{DC}$ which flows through a subset of inductive elements and in superconducting phase drops $\varphi_{DC}$ which develop across each inductive element. The phase drop $\varphi_{DC}$ may be computed given the circuit geometry and parameters as a function of the predetermined current. Examples below illustrate how the predetermined current may be experimentally tuned (or equivalently the super-conducting phase-drop $\varphi_{DC}$) to reach the bias point and thereby enable the resonant 2N-to-1 photon exchange dynamics. Thus, the application of the current is adapted to the configuration of the circuit so as to induce the intrinsic resonant 2N-to-1 photon exchange.

The resonant cat-qubit circuit intrinsically performs a resonant 2N-to-1 photon exchange. In other words, the circuit is configured to perform the resonant 2N-to-1 photon exchange autonomously/natively, that is, without requiring an external time-varying excitation to bridge the gap between 2N times the frequency of the first mode and the frequency of the second mode. In other words, the value of the predetermined current is set in such a manner that the components hosting the first and second modes are in a regime allowing the resonant 2N-to-1 photon exchange. There is no dependence on any microwave devices external to the circuit, such as a parametric pump. A resonant 2N-to-1 photon exchange between respectively the first mode and the second mode is a quantum dynamic that destroys 2N photons of the first mode at the respective resonant frequency of the first mode and creates one photon of the second mode at the respective resonant frequency of the second mode and conversely. Said resonant 2N-to-1 photon exchange is performed when the resonant frequency of the second mode is substantially 2N times the frequency of the resonant first mode, by applying the predetermined current of a constant intensity to the circuit. By "substantially", it is meant that the value of the predetermined current is such that the frequency of the second mode is equal to 2N times the frequency of the first mode - also called a frequency matching condition in some applications - up to a predetermined threshold of the same order of magnitude as the resonant 2N-to-1 photon exchange rate $g_{2N}$.

Since the superconducting quantum circuit reliably performs said quantum dynamics intrinsically, the need of a parametric pump is suppressed, and the quality of the resonant 2N-to-1 photon exchange is improved. Indeed, the removal of the parametric pump eliminates the apparition of detrimental parasitic interactions that affect the quality of the resonant 2N-to-1 photon exchange.

The circuit may be integrated into a device which may also comprise a current source configured to apply the predetermined current of a constant intensity to the circuit such that the frequency of the second mode is substantially 2N times the frequency of the first mode. The current source may be directly connected or inductively coupled to the circuit, so that the induced internal current traverses at least some or all of the elements of the circuit. In other words, the applied current may induce an internal current moving through the surface of the circuit, in specific elements of the circuit. The current source is an apparatus that may be placed at room temperature, and thus not comprising superconducting elements. The current source may apply the predetermined current to the circuit first via conducting wires at room temperature, which are in turn connected, as the temperature decreases, to superconducting wires that apply the current to the superconducting circuit. The current may also be filtered using a low pass filter along its path to reduce the impact of low frequency noise.

In various examples, the device may further comprise a load, a microwave source and a coupler. The coupler may be configured to connect the second mode of the superconducting quantum circuit to the load. The load is a dissipative element, e.g., an element with a given resistance - as opposed to a superconducting element - that is external to the superconducting circuit. The load dissipates photons exchanged from the first mode to the second mode through the resonant 2N-to-1 photon exchange. In other words, photons destroyed from the first mode are evacuated through the second mode via the load to the environment. The microwave source may be configured to apply a microwave radiation at a frequency substantially equal to the frequency of the second mode or at a frequency substantially equal to 2N times the frequency of the first mode. In other words, the microwave source may be configured to control the microwave radiation in amplitude and phase. The microwave source thus drives photons in the form of the microwave radiation into the second mode which in turns drives 2N photons in the first mode through the resonant 2N-to-1 photon exchange. The coupler is an element which may be connected galvanically, capacitively or inductively to elements of the circuit hosting the second mode and which mediates the interaction between the second mode, the load and the microwave source.

Optionally, the coupler may also be configured for coupling the elements of the circuit hosting the second mode of the superconducting quantum circuit to the load and to the microwave source.

The load may be a resistor, a matched transmission line or a matched waveguide. The expression "matched" should be interpreted as meaning that the transmission line or the waveguide are terminated by a resistance at an end different from the end connected to the elements hosting the second mode, the value of such resistance being chosen such that the power going towards the load is mostly absorbed. The load may be comprised within the microwave source.

In various examples, this microwave source may be placed a room temperature and connected to the circuit via coaxial cables. In various examples, attenuators may be placed between the microwave source and the circuit - that is, along the path of the microwave radiation applied by the microwave source - to thermalize the microwave radiation with the cryogenic environment. This allows to apply the microwave radiation without added noise. This microwave radiation does not serve the same purpose as a parametric pump and is not required to obtain the resonant 2N-to-1 photon exchange dynamics. Here, the dissipation from the load, the microwave radiation and the resonant 2N-to-1 photon exchange dynamics intrinsically performed by the circuit are used together to stabilize 2N coherent states in the first mode. Indeed, in the absence of microwave radiation, the stable manifold is the manifold spanned by Fock states $\{|0\rangle, |1\rangle\}$. Since the first mode has some residual single photon dissipation, the state $|1\rangle$ decays towards the state $|0\rangle$, and thus only vacuum is stable in the long run in the first mode. In other words, the device allows the stabilization of a quantum manifold of coherent states beyond the vacuum.

Optionally, the device may comprise a bandpass or a band stop filter connected to the first mode and the second mode of the circuit. The bandpass or the band stop filter may be configured to only allow the coupling of the second mode to the load. Optionally, the device may also comprise a microwave filter to protect the first mode from dissipating in the load. This microwave filter may be interleaved between the load and the coupler. From the point of view of the circuit, this filter aims at preventing the microwave photons at the first resonant frequency to escape the circuit. This can either be done by realising a band stop filter at the first resonant frequency or by realising a bandpass filter at the second resonant frequency as the photon of the second mode are the only ones that need to dissipate in the environment. For some circuits, in which the two modes have different symmetries, the filter may not be necessary, and the proper symmetry of the coupler may be sufficient to prevent the dissipation of the first mode.

Thus, the device enables the stabilisation of 2N coherent states in the first mode, that is, a quantum manifold of coherent states. For example, the microwave source applying the microwave radiation to the second mode through the microwave filter may be seen as a 2N photon drive of the first mode once converted by the resonant 2N-to-1 photon exchange, and the load that dissipates photons of the second mode only may be seen as a 2N photon dissipation of the first mode once converted by the resonant 2N-to-1 photon exchange. The 2N photon drive and 2N photon dissipation enables the stabilisation of 2N coherent states in the first mode.

The single photon drive on the second mode is formally described by the Hamiltonian $H_b = \hbar\epsilon_b b^\dagger + \hbar\epsilon_b^* b$ where $\varepsilon_b$ is the single photon drive strength on the second mode due to the microwave source. The single photon dissipation on the second mode is formally described by the Lindblad operator $L_b = \sqrt{\kappa_b}\, b$ where $\kappa_b$ is the single photon dissipation resulting from the coupling of the second mode to the load.

The 2N-photon drive is formally described by the Hamiltonian $H_{2N} = \hbar\varepsilon_{2N} a^{\dagger 2N} + \hbar\varepsilon_{2N} a^{2N}$ where $\varepsilon_{2N} = 2\varepsilon_b g_{1N}/\kappa_b$ is the effective 2N-photon drive, $g_{2N}$ the 2N-to-1 non-linear conversion rate between the first mode and the second mode. The 2N-photon loss is formally described the Lindblad operator $L_{2N} = \sqrt{\kappa_{2N}}\, a^{2N}$ where $\kappa_{2N} = 4g_{2N}^2/\kappa_b$ is the 2N-photon dissipation rate. The amplitude $\alpha$ of the stabilized coherent states is finally given by $\alpha = \left(\frac{2\epsilon_{2N}}{\kappa_{2N}}\right)^{1/2N}$.

A method of realizing resonant cat-qubit circuits is further provided. This method comprises providing the superconducting quantum circuit as described above and applying a predetermined current of a constant intensity to the circuit or the device comprising the circuit such that the resonant frequency of the second mode is substantially 2N times the resonant frequency of the first mode, N being a positive integer, which effectively engineers a resonant 2N-to-1 photon exchange between the two modes respectively.

This method further comprises using the device comprising the circuit to stabilize a quantum manifold spanned by 2N coherent states, each having the same amplitude and a $\pi/N$ phase difference between each other. This is done by combining the resonant 2N-to-1 photon exchange dynamics provided by the resonant cat-qubit circuit with external dissipation and microwave radiation. Quantum information may eventually be encoded in this quantum manifold, such as a cat-qubit.

A quantum computing system is further provided. This quantum computing system may comprise at least one of the superconducting quantum circuit and/or the device comprising the circuit. The quantum computing system may be configured to use the superconducting quantum circuit and/or the device for performing high quality quantum computation protocols. In other words, the quantum system may use the superconducting quantum circuit and/or the device comprising the circuit for performing fault-tolerant quantum computation. This is made possible thanks to the fact that the intrinsic resonant 2N-to-1 photon exchange dynamics combined with external dissipation and microwave radiation stabilizes a quantum manifold spanned by 2N coherent states of the first mode, also called "cat-qubit states" in some applications. In this quantum manifold, the 2N coherent states have the same amplitude and there is a phase difference of $\pi/N$ among each coherent state. The quantum computing system may use these coherent states to define logical qubits, which are naturally protected to errors thanks to the quantum manifold being stable, notably against bit-flip errors. The quantum system may thus define operations (e.g., CNOT, Hadamard and/or Toffoli gates), which perform computations on the logical qubits.

This opens up a full paradigm for implementing quantum algorithms in a fault tolerant manner.

The resonant cat-qubit circuit will now be discussed in more details.

The circuit may have a specific Hamiltonian when the predetermined current is applied to the circuit. As known in the field, a Hamiltonian is an operator corresponding to the total energy of the superconducting circuit, e.g., including both the kinetic energy and potential energy. The Hamiltonian may be used to compute the time evolution of the circuit. The Hamiltonian may be engineered to exhibit desired quantum dynamics, notably, the resonant 2N-to-1 photon exchange between respectively the first mode and the second mode. The Hamiltonian of the circuit is herein a function of a specific set of parameters of the superconducting quantum circuit and parameter of the predetermined current. The expression "parameter" designates any and all kind of physical parameter of the circuit and/or the predetermined current such as, e.g., capacitance, inductance, resistance, frequency, phase difference, energy levels, zero-point fluctuations of phase, Josephson energy or critical current, and other parameters such as voltage and/or current levels (e.g., a direct current (DC) bias) from the applied predetermined current. The set of parameters is specific in that it consists of parameters of the circuit and parameters of the predetermined current. In other words, the Hamiltonian does not depend on any other parameter than those specific parameters.

Yet in other words, the Hamiltonian depends on, and only on, the circuit and on the predetermined current. For the sake of explanation, the set of parameters may be denoted as a set P1 U P2, where U designates a union operator, the set of parameters P1 consists only of parameters of the circuit, and the set of parameters P2 consists only of parameters of the predetermined current (such as the induced DC bias).

The total energy of the superconducting quantum circuit thus does not depend on parameters of any device external to the superconducting quantum circuit or the predetermined current. Indeed, the Hamiltonian only depends on the set of parameters of the superconducting quantum circuit and/or the predetermined current, which may be predetermined according to quantum engineering specifications. The Hamiltonian thus does not depend on time and in particular does not depend on any time-varying excitation, e.g., from a parametric pump.

In various examples, the Hamiltonian may comprise linear terms. The linear terms describe the existence of modes hosted by elements of the circuit. In other words, each linear term describes the existence of a respective mode among the first and second modes hosted in the circuit.

The Hamiltonian may also comprise non-linear terms. The non-linear terms may describe the interaction between the first and second modes. The non-linear terms may also be called "mixing terms", by analogy with frequency mixing that occurs in classical non-linear microwave circuits. The non-linear terms may comprise a constant that may act as a prefactor. Said constant may describe the strength of the interaction between the first and second modes. The prefactor of the non-linear terms may be smaller or much smaller than the frequencies of the system. The non-linear terms may also be called resonant or non-resonant depending on how compatible they are with the preservation of energy.

The Hamiltonian may be expandable into a sum of terms. The expression "expandable into a sum of terms" should be interpreted as meaning that the operator admits a Taylor series approximation into a sum of terms, it being reminded that it represents the energy of the superconducting quantum circuit. The total number of terms may be finite or possibly infinite, yet the sum of terms always remains finite, per the Taylor series approximation. The sum may comprise dominant terms and a series of subsidiary terms. The expression "dominant term" should be interpreted as designating a term that has a significant impact on the dynamics of the system. For a term to be dominant, it must satisfy the two following conditions. First, the magnitude - whether in absolute terms or in an appropriate norm and with respect to the other terms in the Taylor series approximation - of the said term should have a significant contribution to the magnitude of non-linear part of the Hamiltonian. Second, the term should be resonant in the sense it is compatible with the preservation of energy. The series of subsidiary terms are the terms for which the magnitude of its sum is below the predetermined magnitude. This is all known per se from Taylor series approximations, and thus the subsidiary terms are hereinafter omitted. The Hamiltonian is expandable into a sum between at least a dominant term of the form $\hbar g_{2N} a^{2N} b^{\dagger} + \hbar g_{2N}^{*} a^{\dagger 2N} b$ and a series of subsidiary terms hereinafter omitted here.

In the dominant term $\hbar g_{2N} a^{2N} b^{\dagger} + \hbar g_{2N}^{*} a^{\dagger 2N} b$, a is the annihilation operator of the first mode, b is the annihilation operator of the second mode. Conversely, $a^{\dagger}$ is the creation operator of the first mode, and $b^{\dagger}$ is the creation operator of the second mode. The dominant term $\hbar g_{2N} a^{2N} b^{\dagger} + \hbar g_{2N}^{*} a^{\dagger 2N} b$ is a polynomial in $a$, $a^{\dagger}$, $b$, $b^{\dagger}$, that describes the resonant 2N-to-1 photon exchange. Thus, the dominant term including the term $\hbar g_{2N} a^{2N} b^{\dagger}$ describes the annihilation of $2N$ photons of the first mode and the creation of one photon of the second mode. As the Hamiltonian is a Hermitian operator, the dominant term also includes a reciprocal term - also known as Hermitian conjugate, abbreviated as h.c. - $\hbar g_{2N}^{*} a^{\dagger 2N} b$, where $2N$ photons of the first mode are created and one photon of the second mode is destroyed.

The scalar $g_{2N}$ is a function of the set of parameters consisting of parameters of the circuit and/or parameters of the predetermined current. As the scalar $g_{2N}$ is a prefactor of the dominant term, it denotes the strength of the interaction between the first and second modes, also called "intrinsic coupling strength", namely the term $a^{2N} b^{\dagger}$ (respectively its

Hermitian conjugate). In other words, $g_{2N}$ describes the rate of the resonant 2N-to-1 photon exchange.

As the predetermined current is applied to induce the resonant 2N-to-1 photon exchange - that is, the predetermined current is tuned at the bias point -, the rate of the resonant 2N-to-1 exchange term, that is, the constant $g_{2N}$, is non-zero and the frequency matching condition ensures the term is resonant. In addition, the constant $g_{2N}$ is large in the sense of the Taylor series approximation compared to the other non-linear terms, which are thus subsidiary and will not be further described.

Thus, as the predetermined current is applied to induce the resonant 2N-to-1 photon exchange - that is, the frequency matching condition $2N\omega_a = \omega_b$ is satisfied -, the dominant term is a resonant term, i.e., it is compatible with energy preservation. For any N, the dominant term thus describes a non-linear interaction which is an odd power of the annihilation and creation operators.

The Hamiltonian may include other dominant terms such as a Kerr term $\hbar K_a a^{\dagger 2} a^2/2$, $\hbar K_b b^{\dagger 2} b^2/2$ or cross-Kerr terms $\hbar\chi_{ab} a^{\dagger} a b^{\dagger} b$. Said non-linear terms may have a significant magnitude and are resonant by nature regardless of any frequency matching condition - this only occurs for even powers of the annihilation and creation operators. These Kerr and cross-Kerr terms may be considered as harmful for the desired engineered dynamics. However, the Applicant has discovered that the corresponding constant of the other non-linear terms - that is, the constants $K_a$, $K_b$, $\chi_{ab}$, among others - can be made small thanks to the choice of circuit parameters as illustrated in examples below. In particular, the Applicant has discovered that they vanish near the optimal bias point. Thus, these terms are not further considered in the examples below and are only described for the sake of completeness.

The circuit may be configured to perform intrinsically a resonant 2-to-1 photon exchange between respectively the first mode and the second mode. In other words, N is equal to 1. In this case, the dominant term of the Hamiltonian may be a two-to-one interaction Hamiltonian $\hbar g_2 a^2 b^{\dagger} + \hbar g_2^* a^{\dagger 2} b$. Alternatively, N may be higher than 1, e.g., N= 2. Coherent states of the first mode are eigenstates of the annihilation operator *a* acting on the first mode, e.g., for a given coherent state $|\alpha\rangle$, it results that $a|\alpha\rangle = \alpha|\alpha\rangle$, where $\alpha$ is a complex amplitude. In the paradigm of cat-qubits, the intrinsic 2-to-1 photon exchange stabilizes a quantum manifold of coherent states of the first mode. In the cat-cubit paradigm, cat-qubit states may be defined from the coherent states; for example, the logical qubit state $|0\rangle_L$ may be defined as $|\alpha\rangle$ and logical qubit state $|1\rangle_L$ may be defined as $|-\alpha\rangle$. Both logical states belong to the quantum manifold of coherent states stabilized by the 2-to-1 photon exchange. Cat-qubit states are naturally protected from errors such as bit-flip errors due to the stability of the quantum manifold achieved by the intrinsic 2-to-1 photon exchange. Indeed, bit-flip errors may be suppressed autonomously and with exponential speed. This allows the implementation of quantum gates acting on the logical qubit states, such as CNOT, Toffoli and/or Hadamard gates, to perform fault tolerant computations.

In various examples, the superconducting circuit may have a symbolic representation, e.g., consisting of a set of interconnected dipoles. The expression "symbolic representation" should be interpreted as designating an arrangement of symbols and lines which specify a set of interconnected dipoles. The set of interconnected dipoles (also called components) forms a circuit structure (or topology) equivalent (in functioning) to the non-linear superconducting circuit.

In other words, and as classical in the field of superconducting circuits, the non-linear superconducting circuit is configured to achieve the functioning defined by its symbolic representation, in other words the functioning of the theoretical set of interconnected dipoles shown by the symbolic representation. Yet again in other words, while the circuit may be constructed using a patterned layer of superconducting material, it is to be understood that the circuit admits a symbolic representation by dipoles, for example, capacitors, inductors, and/or Josephson junctions. While the example dipoles describe discrete elements, the man skilled in the clearly understands that these elements correspond to the equivalent circuit of distributed elements in a specific frequency range, e.g., at low frequency, as known in the field.

The interconnections of the set of interconnected dipoles of the symbolic representation may be described via a network topology. In the network topology of this symbolic representation, each branch may represent a dipole of the circuit, a node may be a point of connection between two or more branches, and a loop may be a closed path of the circuit, that is, a path formed by starting at a given node, and returning to the starting node without passing through any node more than once. Each branch may comprise components, e.g., two or more, connected in parallel or in series. For example, a pair of components comprising an inductor and a capacitor - that is, an LC resonator - may be implemented by distributed elements in the patterned layer of the superconducting material, such as:

- two neighboring plates forming a capacitor in parallel with a superconducting wire forming an inductor,
- a portion of superconducting transmission line which ends with 2 different boundary conditions (shorted to ground at one end and open at the other) forming a so-called $\lambda/4$ resonator. The transmission line being for example of the coplanar waveguide type or the microstrip type,
- a portion of superconducting transmission line which ends with 2 identical boundary conditions (open-open or short-short) forming a so-called $\lambda/2$ resonator, the transmission line being for example of the coplanar waveguide type or the microstrip type, or
- a 3D cavity carved in a block of superconducting material that resonates at given frequency which depends on its dimensions.

As known in the field, such distributed elements may have higher frequency modes which are irrelevant and unimportant for the dynamics described here. Hence, these distributed elements may be represented with the symbolic representation. This symbolic representation may be refined by adding elements such as series inductors with each wire connection or a parallel capacitor between any two nodes of the circuit or adding nodes and branches to take into account other modes of the distributed elements. Thus, the symbolic representation allows for a better description of the distributed elements without changing the working principle of the circuit. Hence, as known in the art, the physical circuit - that is the circuit which is actually manufactured - and its symbolic representation are considered equivalent by the man skilled in the art. Indeed, the refining dipoles of the symbolic representation only adjust the resonance frequencies or the zero-point fluctuation of the phase compared to the basic model. When designing the circuit, the final geometry may be fully and accurately simulated with a finite element solver which will readily give the frequencies of the modes, the dissipation originating from the loads and the zero-point fluctuation of the phase across the Josephson junctions which are the only unknown to compute the resonant 2N-to-1 photon exchange rate in any configuration.

The symbolic representation of the circuit, e.g., the set of connected dipoles or components, may comprise at least one superconducting loop, that is, a series of cycle-forming connected components (described by dipoles in the symbolic representation). The at least one loop may include one or more Josephson junctions. Each Josephson junction may consist of a thin insulating layer separating two superconducting leads, that allow Cooper pairs to tunnel through the insulating layer. Each Josephson junction may have a potential energy of the type $U(\varphi) = -E_J cos(\varphi)$ where $E_J$ is the Josephson energy of the junction and $\varphi = \dfrac{2\pi\Phi}{\Phi_0}$ where $\Phi$ is the integral of the voltage across the junction and $\Phi_0$ is the flux quantum. In various examples, the Josephson energy may be tuned during fabrication by choosing the surface and thickness - hence the room temperature resistance - of the insulating barrier.

The Josephson junction may be called a non-linear inductor. Indeed, by comparing the potential energy of an inductive element $U(\varphi) = E_L \varphi^2/2$ where $E_L$ is the inductive energy, with the potential energy of the junction, at first order in $\varphi$ the junction behaves as an inductor. When the predetermined current is applied to the circuit, the internal current flows through the junction, either from a direct connection or from the mutual inductance with the superconducting loop, the junction is embedded in, and this induces a phase-drop $\varphi_{DC}$ across the junction. Thus, the application of the predetermined current modifies the potential energy of the Josephson junction as follows:

$$U(\varphi) = -E_J \cos(\varphi_{DC} + \varphi) = -E_J \cos(\varphi_{DC}) \cos(\varphi) + E_J \sin(\varphi_{DC}) \sin(\varphi).$$

The first term on the right side of the sum of the above equation is a cosine non-linearity describing a change of the effective Josephson energy of the junction $E_J \rightarrow E_J cos(\varphi_{DC})$. Since the inductance of the Josephson junction is inversely proportional to the Josephson energy, the DC offset $\varphi_{DC}$ enables tuning the inductance of the junction and hence the frequencies of the modes that participate in this junction. In the examples, the DC offset may be tuned to reach the frequency matching condition $2N\omega_a = \omega_b$. The second term describes a non-linearity corresponding to a sine non-linearity. The Taylor series expansion of the sine none-linearity comprise terms of odd powers of $\varphi$ providing odd wave mixing, and thus comprise the terms describing resonant 2N-to-1 photon exchange. In particular, the point at which the phase drop takes the value $\varphi_{DC} = \pi/2$ is where the junction's inductance becomes infinite and thus the junction behaves as an open element. Consequently, the cosine non-linearity of the potential energy vanishes, that is, the potential energy is zero, and the sine non-linearity is at its maximum.

The other inductive element in the loop that are linear may keep the same inductance when a DC current flow through the loop or a DC phase-drop develops across the loop. In examples, a Josephson junction of energy $E_J$ embedded in the at least one loop of inductive energy $E_L$, may be described via the ratio $\beta = \dfrac{E_J}{E_L}$. When biased by the predetermined current, equivalently described by the effective magnetic flux $\varphi_{ext}$ that passes through the loop, an internal DC current arises in the superconducting loop and produces a phase drop $\varphi_{DC}$ across the junction that depends only on $\varphi_{ext}$ and $\beta$. In examples, the phase drop may be computed numerically as the solution of the following equation: $\varphi + \beta \sin(\varphi + \varphi_{ext}) = 0$, with $1 + \beta \cos(\varphi + \varphi_{ext}) > 0$.

The solution of the above equation may be called $f(\varphi_{ext}, \beta)$. For example, when a loop of inductance $E_L$ comprises 2 junctions, each one having an energy $E_J$, the phase drop across each junction is denoted by $\varphi_{DC} = f(\varphi_{ext}/2, \beta/2)$.

The Hamiltonian of the circuit may be determined in any manner. For example, the Hamiltonian may be determined by first determining the equivalent inductance of each junction when the predetermined supercurrent is applied to the circuit. This equivalent inductance (which depends on the DC phase-drop across the junction) is given by $L_J = \varphi_0/E_J cos(\varphi_{DC})$, where $\varphi_0$ is the reduced flux quantum $\Phi_0/2\pi$. The frequencies of the mode may be computed algebraically or numerically, by replacing the junction in the circuit by its equivalent inductance, it may also be performed for more complex circuit layouts by performing microwave simulation with finite elements. These frequencies directly give out the linear part of the Hamiltonian. The modes frequencies can be computed along with the mode geometry which describes between any two points of the circuit what oscillating phase difference exist when the mode is excited.

The magnitude of the oscillating phase difference imposed across the Josephson junctions will be of particular interest to compute the non-linearity of the system. In the quantum regime, the phase difference across the junction may be written as $\varphi = \varphi_{DC} + \varphi_a(a + a^\dagger) + \varphi_b(b + b^\dagger) + \cdots$, where $\varphi_{DC}$ is the DC phase offset computed earlier, $\varphi_a$ and $\varphi_b$ are the zero-point fluctuation of the phase across the junction which is directly to the geometry of the mode up to a normalization. The phase difference may include other terms in "...", e.g., associated with other modes. These terms are hereinafter omitted since they are not relevant in this context.

The non-linear terms of the Hamiltonian may be computed by performing a Taylor approximation on the potential energy of the junction, $-E_J\cos(\varphi)$, and by summing the contribution of each junction of the circuit. All that is required to fully describe the circuit is to find out the DC phase drop across the junction, the frequencies of the modes and the zero-point fluctuations of the phase across the junction associated with each mode of the system.

In various examples, as the circuit hosts the first and second modes at respective frequencies $\omega_a/2\pi$ and $\omega_b/2\pi$, the linear part of the Hamiltonian may be written as $H = \hbar\omega_a a^\dagger a + \hbar\omega_b b^\dagger b$, where $\hbar$ is the reduced Plank constant.

Given that at least one term of the interaction provided by the Josephson junction is of the form $H_J = E_J \sin(\varphi_{DC}) \sin(\varphi_a(a + a^\dagger) + \varphi_b(b + b^\dagger))$, where $\varphi_{DC}$ is the DC phase-drop across the junction induced by the predetermined current and $\varphi_a$ and $\varphi_b$ are the zero-point fluctuation of the phase across the junction associated with the first mode and second mode respectively. The Hamiltonian may thus be expanded in a Taylor series, e.g., in any desired with respect to the Taylor series expansion, to obtain the resonant 2N-to-1 photon exchange Hamiltonian $H_{NL} = \hbar g_{2N} a^{2N} b^\dagger + h.c$, where

$$\hbar g_{2N} = E_J \frac{\varphi_a^{2N} \varphi_b}{2N!}$$ 

is the resonant 2N-to-1 photon exchange rate that is resonant provided $2N\omega_a = \omega_b$. Thus, the resonant 2N-to-1 photon exchange only depends on the parameters of the circuit and of the predetermined current, such as said parameters.

By contrast, and as mentioned previously, existing cat-qubit circuits rely on the use of a parametric pump to perform the 2-to-1 photon exchange. In these prior art realisations, the two-to-one photon interaction Hamiltonian is of the form $\frac{H_2}{\hbar} = g_2(t)a^2 b^\dagger + h.c$ . In these cases, the coupling term $g_2(t)$ is modulated via the parametric pump, where the pump injects an external time-varying parameter having a frequency $\omega_p = 2\omega_a - \omega_b$. The parametric pump is used in the prior art to render the non-linear interaction resonant but has detrimental effects.

Examples and illustrations of the circuit and device will now be discussed with reference to the figures. In the following, the expression "resonant cat-qubit circuit", "circuit" and " superconducting circuit" are interchangeable and designate the circuit performing the 2N-to-1 photon exchange allowing to stabilize the cat-qubit when the second mode is properly driven and made dissipative.

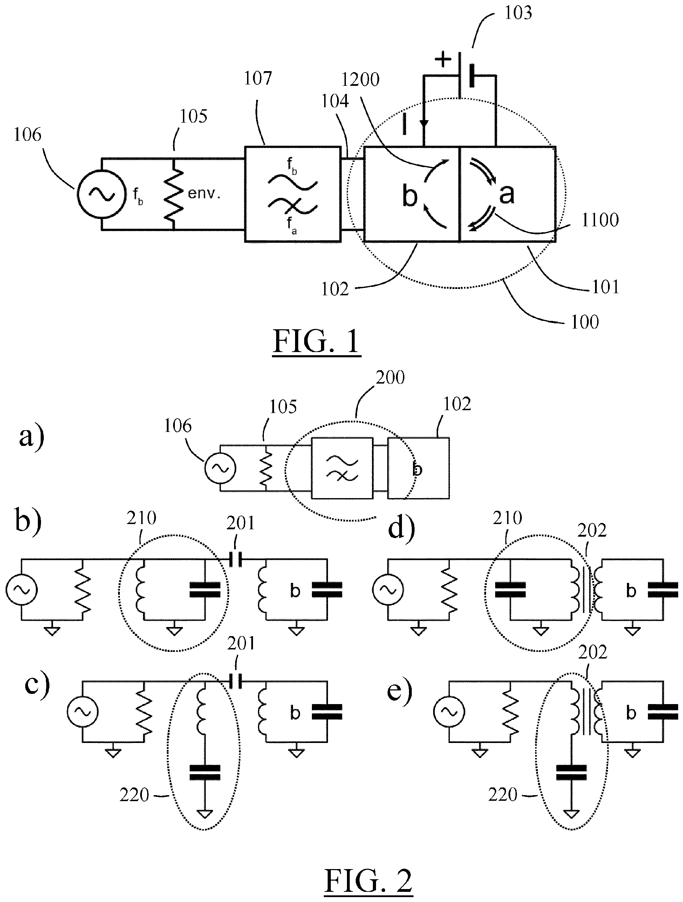

Figure 1 shows an example of the device comprising the resonant cat-qubit circuit.

For the sake of illustration, N will be equal to 1 hereinafter, but the same also applies to the case of other integer values of N. The device incorporates a non-linear superconducting circuit 100, which performs intrinsically the 2-to-1 photon exchange symbolized by a back-and-forth single arrow 1200 and the double arrows 1100 between a first mode $a$ 101 and a second mode b 102. A current source 103 is connected via wires to the non-linear superconducting circuit 100. In other words, the current source 103 is directly connected to the circuit so that the predetermined current flows through at least a subset of elements of the non-linear superconducting circuit 100. The current source 103 is configured to apply the predetermined current to the circuit 100. The current source 103 both enables a 3-wave mixing interaction and tunes the frequency matching condition as $2f_a = f_b$. The components of the circuit hosting the second mode 102 are coupled via a coupler 104 to a load 105. This coupling renders the second mode dissipative. The device also incorporates a microwave source 106 at frequency $f_b$ used to drive the circuit 100. The device incorporates a microwave filter 107 configured as a bandpass filter with a frequency $f_b$. Alternatively, the filter 107 may be configured as a band stop filter at a frequency $f_a$, and may be placed in between the environment and the two modes to isolate the first mode and thus prevent the first mode from suffering additional losses coming from unwanted coupling to the load 105.

Figure 2 shows examples of the coupling of the second mode of the superconducting circuit to the load, and filters that may be integrated to the device to allow the coupling of only the second mode to the load.

Schematic a) of Figure 2 shows the coupling 200 to the device via the coupler 104 and the filter 107, so as to couple the second mode 102 of the circuit 100 of Figure 1 to the load, and to ensure driving the circuit 100 with a microwave source 106 at frequency $f_b$, while only allowing losses of the second mode; modeled as a resistor 105, at the second resonant frequency $f_b$ and not allowing losses of the first mode at the first resonance frequency $f_a$. Figure 2 admits at least two possibilities for the coupling 200: a bandpass filter (also shown in schematics b) and d) of Figure 2) at frequency $f_b$ or band stop filter (also shown in schematics c) and e) of Figure 2) at frequency $f_a$. Yet alternatively, when the circuit is manufactured in a 3D architecture, another possible solution is the use of a waveguide high-pass filter to couple to the second mode to the load, thanks to the high frequency selectivity.

Schematics b) to e) of Figure 2 show the different possibilities for the coupling 200. Schematic b) shows a bandpass filter 210 at frequency $f_b$ capacitively coupled (201) to the input port. The bandpass filter (which is an LC oscillator) 210 is configured to resonate at frequency $2\pi f_b = \sqrt{1/LC}$, its impedance $Z = \sqrt{L/C}$ tunes the width of the bandpass.

Schematic c) shows a band stop filter 220 at frequency $f_a$ capacitively coupled 201 to the input port. The band stop filter 220, which is an LC stub, is configured to resonate at frequency $2\pi f_a = \sqrt{1/LC}$, its impedance $Z = \sqrt{L/C}$ tunes the width of the band stop.

Schematic d) shows a bandpass filter 210 at frequency $f_b$ inductively coupled 202 to the input port. The bandpass filter 210, which is an LC oscillator, is configured to resonate at frequency $2\pi f_b = \sqrt{1/LC}$, its impedance $Z = \sqrt{L/C}$ tunes the width of the bandpass. This configuration is convenient because the microwave radiation (e.g., RF) input port of the device can also be used to input the current bias.

Schematic e) shows a band stop filter 220 at frequency $f_a$ inductively coupled (202) to the input port. The band stop filter, which is an LC stub; is configured to resonate at frequency $2\pi f_a = \sqrt{1/LC}$, its impedance $Z = \sqrt{L/C}$ tunes the width of the band stop.

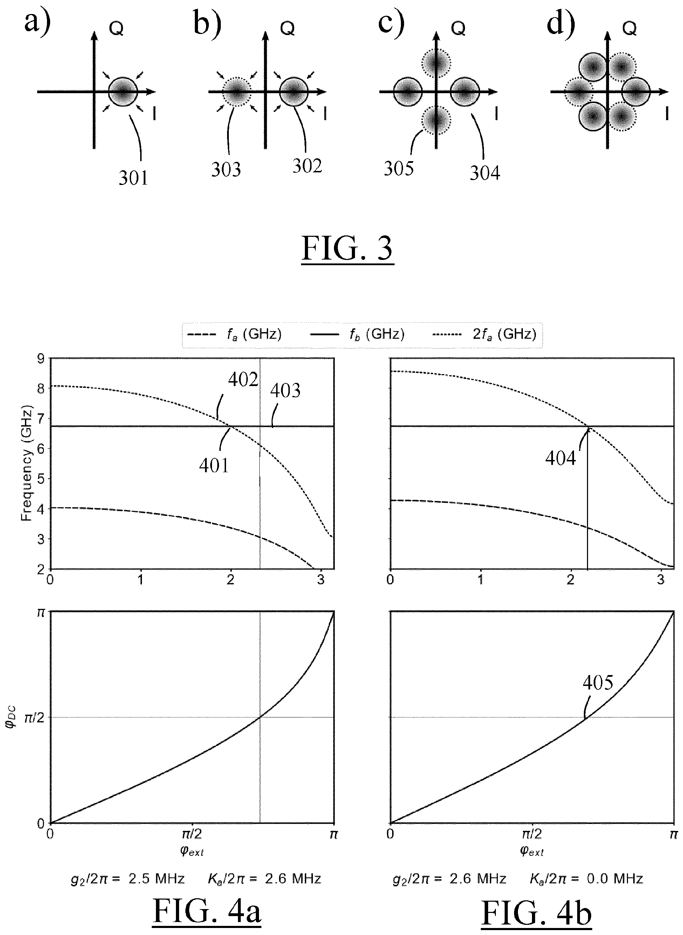

Figure 3 illustrates examples of stabilization a quantum manifold of coherent states of the first mode, achieved by the resonant 2N-to-1 photon exchange.

Schematic a) of Figure 3 illustrates a linear scheme comprising a single photon drive - a microwave tone at the mode frequency - characterized by an amplitude $\varepsilon_1$ and single photon dissipation with rate $\kappa_1$. After a timescale $1/\kappa_1$, the mode state converges to a single coherent state 301 of amplitude $\alpha = 2\varepsilon_1/\kappa_1$. This is the stable steady state of the dynamics. However, this steady state is unique and one cannot encode information into it. The state is represented as a blurry point in the quadrature space of the mode due to the uncertainty principle of quantum mechanics.

Schematic b) of Figure 3 illustrates a first mode undergoing a two-photon drive with strength $\varepsilon_2$ and two-photon dissipation with rate $\kappa_2$ that has 2 stable steady states (302, 303) of amplitude $\alpha = \sqrt{2\varepsilon_2/\kappa_2}$ and with opposite phase. Since there are two possible states, one can encode information: the state $|0\rangle$ 302 is circled with a solid line and the state $|1\rangle$ 303 with a dotted line. This encoding is robust against bit-flip errors that flip the system between state $|0\rangle$ and state $|1\rangle$ due to the stable nature of the dynamics that converges to the two states. The encoding does not correct the other error channel, that is, phase-flip errors. However, an additional error correcting scheme may be added to treat this separately. This stabilization is made possible by coupling to an extra mode and by engineering a 2-to-1 photon exchange between the first mode and the second mode.

Schematic c) of Figure 3 illustrates the case N=2, which uses a 4-photon drive and 4-photon dissipation to stabilize 4 states in the phase space. In this 4-dimensional manifold, one can encode a state $|0\rangle$ in one superposition of 2 coherent states 304 shown in solid lines, and a state $|1\rangle$ in another superposition of 2 coherent states 305 shown in dashed lines. There remains 2 degrees of freedom in the 4-dimensional manifold which can serve as an error manifold used to perform first order quantum error correction This stabilization is made possible by coupling to an extra mode and by engineering a 4-to-1 photon exchange between the first mode and the second mode.

Schematic d) of Figure 3 illustrates the increase of the dimension of the stabilized manifold. The increase in dimension allows for a higher order error correction, compared to lower values of N. With 6 photon drive and 6 photon dissipation (that is, N=3), one can stabilize a 6-dimensional manifold of coherent states that can perform second order quantum error correction. This stabilization is made possible by coupling to an extra mode and by engineering a 6-to-1 photon exchange between the first mode and the second mode.

Figure 4 illustrates examples of how to determine the intensity of the current to be applied to the circuit to achieve the resonant 2N-to-1 photon exchange.

Figure 4a, shows the tuning of the predetermined current to be applied to the superconducting circuit. For a given N, the bias point is the point at which the resonant frequencies of the first and second modes fulfils the matching condition $2N\omega_a = \omega_b$. In other words, the equality may have a margin of error of the order of magnitude of a constant $g_{2N}$, which describes the rate of the resonant 2N-to-1 photon exchange. The bias point may be reached by varying the current of the circuit, and it corresponds to the point 401 that is experimentally determined by the anti-crossing between a virtual $2N\omega_a$ frequency line 402 and the $\omega_b$ spectroscopic frequency line 403. The parameters of the elements of the circuit may be chosen in a range where the respective frequencies of the two modes are close to the frequency matching condition.

For some circuits, there exists an optimal choice of parameters of the elements of the circuit. Thus, the bias point is an optimal bias point. At this optimal bias point spurious even terms such as Kerr and cross-Kerr terms are also cancelled as mentioned previously.

Figure 4b shows that the optimal bias point 404 may coincide with the point 405 where the DC phase drop across

the junction is $\pi/2$. To reach this optimal bias point, parameters of the circuit may be adjusted at manufacturing. Alternatively, a separate tuning knob can be added. This extra tuning nob, which may be realized for instance by incorporating in the second mode a SQUID - two junctions in parallel, biased with an external current in order to control its frequency independently -, may be used as an extra degree of freedom to reach both the frequency matching condition and the vanishing Kerr condition. The man skilled in the art will recognize that this is only a matter of implementation.

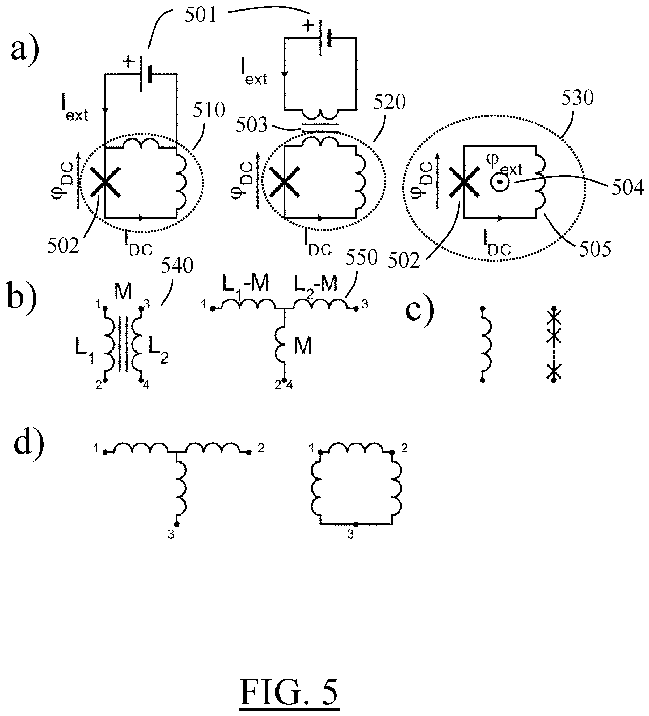

Figure 5 shows several examples of circuit symbolic representations alternatively used throughout this description.

Schematic a) of Figure 5 shows two example implementations of the current bias: a direct bias via galvanic connection and a mutual inductance bias symbolized by transformer 503 which generates a magnetic field to induce an internal current to the circuit. The first circuit (on the left hand of schematic a)) shows a current source 501 galvanically coupled to the superconducting loop. The examples show that at least one terminal of the current source is directly connected to the superconducting loop 510, which is isolated from the rest of the circuit for convenience. This is however a matter of implementation. The current source may be connected in any manner so as to apply the predetermined current, as shown below. When applying the predetermined current $I_{ext}$, a phase-drop $\varphi_{DC}$ flows across the junction 502. This is because a portion of the internal current $I_{DC}$ passes through the junction 502. The second circuit (at the right side of the first circuit) shows a current source inductively coupled to the superconducting loop via mutual inductance 503. This is diagrammatically shown as a transformer 503. The current source generates a magnetic field which in turns generates a current in the superconducting loop. This current is associated with a phase-drop across the junction.

The current source may thus be implemented in any manner so as to achieve a phase drop across the junction. Schematic a) of Figure 5 exemplifies this in the circuit 530 which equivalently summarizes the two circuits 510 and 520 of schematic a). Upon application of the predetermined current - by any one of the standard current source or by the transformer -, the flux $\varphi_{ext}$ 504 represents the effective magnetic field that biases the loop induced by the predetermined current applied to the circuit. The flux may also be called external flux $\varphi_{ext}$ when integrated on the surface of the loop in the following. The inductance 505 represents the total self-inductance of the superconducting loop in which is embedded the junction 502. This final notation is also used when the circuit is placed in a global magnetic field which may be produced by a magnetic coil outside the plane of the circuit the axis of which being perpendicular to the plane of the circuit. The external flux can be expressed as an angle $\varphi_{ext} = 2\pi\Phi_{ext}/\Phi_0$ where $\Phi_0$ is the flux quantum. For this application, it may be assumed that the system is periodic in $\varphi_{ext}$ with period $2\pi$ and symmetric with respect to $\varphi_{ext} = 0$. Hence, analysis may be restricted to the interval $\varphi_{ext} \in [0, \pi]$.

Schematic b) of Figure 5 shows an alternative description of the transformer as the current source. The transformer, here referenced 550, may be two circuit branches that are not galvanically connected - that is, not directly in contact - and which share a mutual inductance due to their proximity. Alternatively, the transformer 550 may be portion of the circuit where two loops galvanically share a common conductor. The transformer 550 can be effectively implemented in practice.

Schematic c) of Figure 5 shows replacing the inductances with arrays of junctions in series. Unless specified otherwise, this array can comprise as little as a single junction.

Schematic d) of Figure 5 shows a Y-$\Delta$ transform for inductors which can be used to change the topology of the circuit without changing its behavior producing an alternative circuit that simplifies the analysis, while following the same principles of the other embodiments.

The circuit may be configured to perform the resonant 2N-to-1 photon exchange when the predetermined current is applied to induce a phase difference across the one or more Josephson junctions. Examples below illustrate how the energy of the Josephson junction, and more generally of a non-linear inductive device, may be engineered to perform the resonant 2N-to-1 photon exchange. The presence of at least one loop including one or more Josephson junctions facilitates the intrinsic resonance of the circuit. Indeed, the energy of the Josephson junction may depend on the parameters of the components hosting the first and second modes, and the predetermined current inducing an internal current flowing through the at least one loop. Indeed, one or more Josephson junctions comprised in the loop provide mixing capabilities which enable the resonant 2N-to-1 photon exchange. That is, the energy of the one or more Josephson junctions describe the interaction of the first and second mode created by the resonant 2N-to-1 photon exchange when the predetermined current is applied through at least two nodes of the circuit.

Examples below are presented with the assumption that the circuit is operated at the optimal bias point per the above principles. This allows to improve the readability of the mathematical expressions provided below. However, it should be noted that the examples below also apply in the case of a non-optimal bias point.

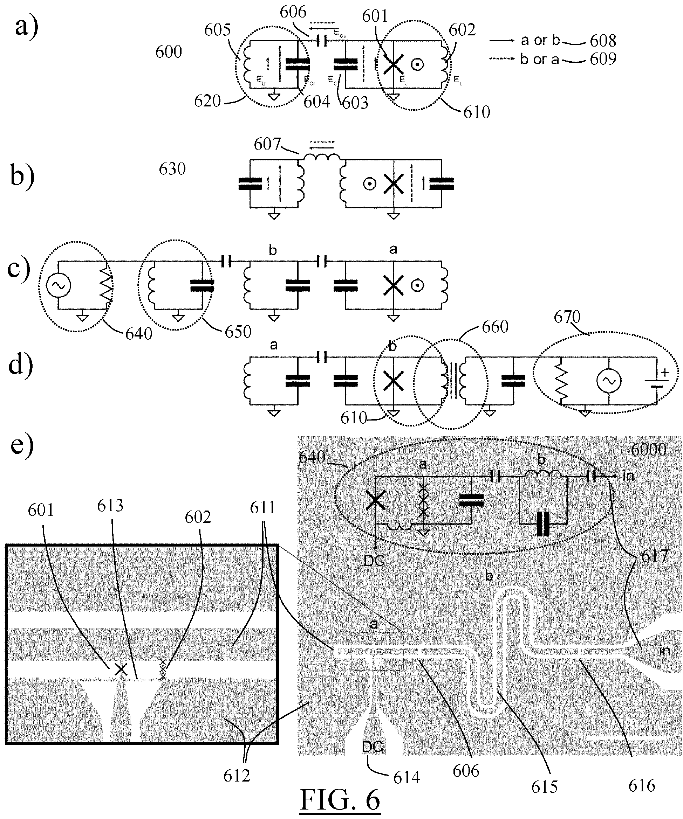

Schematics a) to e) of Figure 6 show embodiments of the circuit 600 in which the symbolic representation of the circuit comprises at least one loop that includes one or more Josephson junctions. The circuit 600 of this example is configured to perform the resonant 2N-to-1 photon exchange when the predetermined current is applied to induce a phase difference across the one or more Josephson junctions. Circuit 600 of this example is provided without an input current source. However, it is to be understood that the current source may be implemented in any manner as long as it induces the proper current bias into the at least one loop. This may be achieved by a standard current source (connected galvanically in any manner to the circuit) or a transformer which generates a magnetic field to induce an internal current to the circuit 600. Examples below show a particularly efficient implementation of the current source in the circuit 600.

In the circuit 600, the at least one loop 610 includes a first Josephson junction 601 arranged in parallel with a first inductive element 602 and a first capacitive element 603. An inductive element, such as the first inductive element 602, may be a dipole or ensemble of dipoles designed for adding inductance to the circuit. For example, the inductive element may be a single inductor - that is, a single superconducting strip with a given inductance - or several inductors arranged in series. In the case of several inductors arranged in series, the total inductance is the sum of the respective inductances of each inductor. Alternatively and/or additionally, the inductive element 602 may also comprise an array of Josephson junctions that contains at least two junctions. Capacitive elements such as the first capacitive element 603 may be a single capacitor or a several capacitors arranged in parallel. The loop comprises respective first and second extremum nodes. Each respective extremum node is thus a common node connecting a respective node of the first Josephson junction 601 with the first inductive element 602 and the first capacitive element 603. Moreover, the Josephson junction 601 has a Josephson energy $E_J$, the inductor 602 has an energy denoted as $E_L$ and the capacitor 603 has an energy denoted as $E_C$.

The circuit may also comprise a second inductive element 605 and a second capacitive element 604 arranged in parallel to form a resonator 620. The arrangement may comprise respective first and second extremum nodes, each connecting the second inductive element 605 and the second capacitive element 604. The inductive element 605 may have an energy denoted as $E_{Lr}$ and the capacitive element 604 may have an energy denoted as $E_{Cr}$. The circuit may also comprise a coupling capacitive element 606 or inductive element 607. The parallel LC resonator 620 is linearly coupled to the non-linear resonator formed by the Josephson junction 601, the inductive element 602 and the capacitive element 603 in parallel. As mentioned above, the circuit 600 is a symbolic representation of the superconducting circuit. Thus, elements of the circuit such as the resonator 620 may be manufactured in any manner known in the art. For example, it may be a portion of a transmission line or a 3D cavity.

The resonator may also be a mechanical resonator coupled capacitively 606 via a piezo-electric material.

The first extremum node of the loop 610 may be connected to the first extremum node of the second inductive element 605 and the second capacitive element 604 may be arranged in parallel via the coupling capacitive element 606 or inductive element 607. The second extremum node of the loop 610 and the respective second extremum node of the second inductive element 605 and the second capacitive element 604 arranged in parallel may be connected to a common ground.

When coupled via the coupling element 606 (respectively 607 for schematic b)), the resonators hybridize slightly provided their frequencies are different and the coupling element is small (small capacitance, large inductance), thus forming 2 modes. A linear mode 608 may be mostly hosted or localized on the linear resonator 620. A non-linear mode 609 is mostly hosted or localized on the parallel arrangement of the loop 610 and first capacitive element 603. The circuit is thus arranged to perform intrinsically the resonant 2N-to-1 photon exchange.

Schematic 6b shows a circuit 630 which is a variation of circuit 600. The difference between these two circuits is the replacement of the coupling capacitor 606 with an inductor 607. This alternative implementation uses the same principles as those explained above.

Schematics c) and d) show examples of the device incorporating the circuit 600. In addition, these examples illustrate how the modes may be chosen according to experimental constraints. In schematic c), the non-linear mode is the first mode, and the linear mode is the second mode. In schematic d), the linear mode is the first mode, and the non-linear mode is the second mode.

In addition, schematic c) shows a microwave source 640 driving the circuit, coupled to a resistive load for dissipation, and an LC resonator 650 serves as a bandpass filter tuned at the resonant frequency of the second mode.

Schematic d) shows another example of the device incorporating the circuit 600. Here, a DC current source is coupled with the microwave source and a resistive load 670. The current source is coupled to the circuit via a transformer 660, which induces a current in the loop 610.

The alternatives of schematics b) to d) follow the same principles as the circuit of schematic a) and the device. In particular, the choice of which of the first mode and second mode may be linear depends on the trade-off which depends on the experimental set-up.

Schematic e) shows an example of the implementation of the symbolic representation of the circuit 600 in a planar superconducting pattern. The superconducting circuit is manufactured in a coplanar waveguide geometry (CPW). The background 6000 of the planar superconducting pattern corresponds to superconducting metal remaining on the dielectric substrate after fabrication. Josephson junctions are represented as black crosses. The non-linear mode is hosted in a superconducting island 611 which has a capacitance to ground 612 and is connected to ground via a single junction 601 and a three-junction array 602 that acts as a compact inductive element. The superconducting loop that is formed is flux biased galvanically with a DC current line that shares part of the inductance to ground 613 with the resonator. The wires that bring the DC current are connected to the DC port 614 and to ground. The DC port 614 is connected to the current source, which may be a current source at ambient temperature, via superconducting and non-superconducting wires. This lumped resonator is capacitively coupled 606 to a coplanar waveguide $\lambda/2$ resonator 615 that acts as a second mode. This

coplanar waveguide $\lambda/2$ resonator has multiple resonances, each of them can be modelled by a LC resonator similarly to the resonator 620. In turn, this second mode is coupled capacitively 616 to the external environment which connects to the circuit via the RF input port 617. In this design, the filter is not shown. The resistive load is typically the 50 $\Omega$ transmission line that terminates in the 50 $\Omega$ input of a microwave generator. The inset diagram 640 is a zoom on the junction layout of the planar superconducting pattern.

Referring again to the circuit 600, the computation of the dominant terms of the Hamiltonian rate describing the resonant 2N-to-1 photon exchange will now be discussed. As mentioned previously, for the sake of simplicity, it is assumed that the parameters of the circuit are designed such that the bias point is an optimal bias point. This means that the frequency matching conditions coincides with the point where $\varphi_{DC} = \pi/2$. In that case, the inductive energy of the loop 610 is given solely by the inductance, and hence the frequency of the non-linear resonator is given by $\omega_{nl} = \sqrt{8E_C E_L}$ . The frequency of the linear resonator is given by $\omega_l = \sqrt{8E_{Cr}E_{Lr}}$ . In some configurations, the frequencies may be chosen as $\omega_l = \omega_b = 2N\omega_a = 2N\omega_{nl}$ (e.g., schematic c)) or $\omega_l = \omega_a = \omega_b/2N = \omega_{nl}/2N$ (e.g., schematic d)). First, as exemplified in schematic c), computations are performed assuming the non-linear mode is the first mode $a$ and the linear mode is the second mode $b$. Regardless of how the linear coupling is made in between the two resonators, it may be summarized by defining a coupling strength $g$. The detuning between the two modes may be defined as $\Delta = \omega_b - \omega_a = (2N - 1)\omega_a$ at the frequency matching condition. Since in practice $g \ll \Delta$, the detuning is in the so-called dispersive limit which enables to simplify the computation of the non-linear Hamiltonian. This linear coupling will affect slightly the frequencies of the two modes. A full diagonalization of the two modes system allows to adjust the values of $E_C$, $E_L$, $E_{Cr}$, $E_L$, to get the targeted frequencies. At the optimal bias point and in the limit $g \ll \Delta$, the interaction provided by the junction may be expressed as $H_J$ = $E_J \sin(\varphi_a(a + a^\dagger + \varepsilon_b + \varepsilon b^\dagger))$, where $\varphi_a = \left(\frac{2E_C}{E_L}\right)^{1/4}$ is the zero point fluctuation of the phase across the Josephson junction associated with mode $a$, $\epsilon = \frac{g}{\Delta}\frac{\omega_b}{\omega_a + \omega_b}$ describes the linear coupling and $\varepsilon\varphi_a$ is the zero point fluctuation of the phase across the Josephson junction associated with mode $b$. By expanding this Hamiltonian at the desired order, one can get the resonant 2N-to-1 photon exchange Hamiltonian $H_{NL}$ = $\hbar g_{2N}a^{2N}b^\dagger$ + h. c. where $\hbar g_{2N} = E_J \epsilon \frac{\varphi_a^{2N+1}}{2N!}$ .

If the converse choice is made, as exemplified in schematic d) in which the linear mode is the first mode $a$ and the non-linear mode is the second mode $b$, the interaction provided by the junction writes $H_J = E_J \sin(\varphi_b(b + b^\dagger + \varepsilon a + \varepsilon a^\dagger))$, where $\varphi_b = \left(\frac{2E_C}{E_L}\right)^{1/4}$ is the zero point fluctuation of the phase across the Josephson junction associated with mode $b$, $\epsilon = \frac{g}{\Delta}\frac{\omega_a}{\omega_a + \omega_b}$ characterizes the linear coupling. Expanding this Hamiltonian as a Taylor series allows to obtain the resonant 2N-to-1 photon exchange Hamiltonian $H_{NL}$ = $\hbar g_{2N}a^{2N}b^\dagger$ + h. c. where $\hbar g_{2N} = E_J \epsilon^{2N} \frac{\varphi_b^{2N+1}}{2N!}$ .

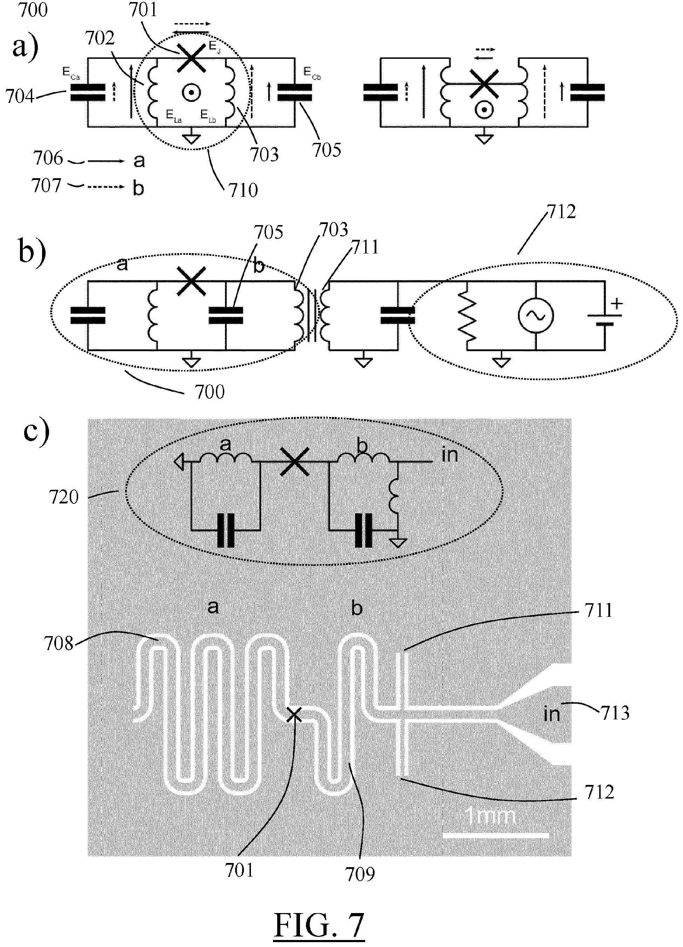

Figure 7 shows another embodiment of the circuit where the symbolic representation of the circuit comprises at least one loop that includes one or more Josephson junctions. The circuit 700 according to this example is also configured to perform the resonant 2N-to-1 photon exchange when the predetermined current is applied to induce a phase difference across the one or more Josephson junctions. Circuit 700 according to this example is configured to perform intrinsically the resonant 2N-to-1 photon exchange between the first mode and the second mode in such a way that the two modes are hosted concurrently in the loop.

In the circuit 700, the at least one loop 710 may include a first inductive element 702, a central Josephson junction element 701, and a second inductive element 703 arranged in series. The first inductive element 702 and the second inductive element 703 may respectively be either an inductance, a single Josephson junction or an array of Josephson junctions. The central Josephson junction 701 may thus be arranged between the first and second inductive element as a loop in series. The arrangement in series may comprise a first inner node connecting a pole of the first inductive element 702 with a pole of the Josephson junction 701. The arrangement in series may also comprise a second inner node connecting a pole of the second inductive element 703 with another pole of the Josephson junction 701. The arrangement in series may also comprise a closed-loop node connecting another pole of the first inductive element 702 with another pole of the second inductive element 703.

Said at least one loop 710 may be connected to a common ground via the closed-loop node. The circuit may also comprise a first capacitor 704 and a second capacitor 705. The first capacitor 704 may be connected in parallel with the first Josephson junction 702 between the common ground and the first inner node of the loop. The second capacitor 705 may be connected in parallel with the second Josephson junction 702 between the common ground and the second inner node of the loop.

The superconducting quantum circuit 700 is thus configured to perform intrinsically the resonant 2N-to-1 photon exchange between respectively the first mode and the second mode when the predetermined current is applied.

As mentioned above, the two modes are hosted concurrently in the loop 710. This maximizes their participation in the central junction and hence increases the strength of the resonant 2N-to-1 photon exchange. The circuit on right hand side of schematic a) of Figure 7 shows how one can choose the participation of the central junction to tune the non-linearity of the circuit and hence the strength of the resonant 2N-to-1 photon exchange. This is done by connecting the junction at the desired level along the inductive part of the modes in order to pick-up only a portion of the zero-point fluctuations of the phases.

It is again assumed for the sake of simplicity that the circuit is designed to be biased at its optimal bias point. To simplify the derivation of the Hamiltonian of the circuit 700 of this example, it is assumed that the intrinsic capacitance of the junction is zero. In practice, a full diagonalization of the system can take into account a finite capacitance. In this example, the modes of the circuit are hosted by respective LC-resonators, a first LC resonator being formed by the first inductive element 702 and the first capacitor 704, and a second LC resonator being formed by the second inductive element 703 and the second capacitor 705 each. Hence, the frequency of the first mode (hosted in the left resonator for instance) is given by $\sqrt{8E_{Ca}E_{La}}$ and the frequency of the second mode (hosted in the right resonator for instance) is given by $\sqrt{8E_{Cb}E_{Lb}}$, these components being adjusted to reach the frequency matching condition $2N\omega_a = \omega_b$. Then, since $\varphi_{DC}$ is assumed to be $\pi/2$ the junction Hamiltonian writes: $H_J = E_J \sin(\varphi_a(a + a^\dagger) + \varphi_b(b + b^\dagger))$ where $\varphi_a = \left(\frac{2E_{Ca}}{E_{La}}\right)^{1/4}$ and $\varphi_b = \left(\frac{2E_{Cb}}{E_{Lb}}\right)^{1/4}$. By expanding this Hamiltonian at the desired order, one can get the resonant 2N-to-1 photon exchange Hamiltonian: $H_{NL} = \hbar g_{2N} a^{2N} b^\dagger + h.\,c.$ where $\hbar g_{2N} = E_J \frac{\varphi_a^{2N}\varphi_b}{2N!}$.

Schematic b) of Figure 7 shows another example of a symbolic representation of the device comprising the circuit 700. The circuit 700 is the same as in schematic a), with a rearrangement of the capacitor 705 and the inductor 703 for the sake of readability of the symbolic representation. Thus, in the circuit 700 comprised in the device, the first mode is coupled to the second mode via the Josephson junction. Both the first and second LC resonators of the circuit 700 are shorted to the superconducting ground at the other end (not coupled to the Josephson junction) enabling the formation of superconducting loop that can be biased to reach the optimal bias point. The second LC resonator is inductively coupled via a transformer 711 to another resonator that acts as bandpass filter between the system and the environment 712. The environment 712 comprises a load, a microwave source, and a DC current source. In the same way as before, the same input port of the device may be conveniently used to bring DC current and microwave radiation to the circuit.

Schematic c) of Figure 7 shows an example of the manufacturing of the circuit 700 as a planar superconducting pattern. The superconducting circuit shown is configured in a coplanar waveguide geometry (CPW) where the grey part represents the superconducting metal left on the dielectric substrate. The cross in black represents the Josephson junction. This circuit consist of two $\lambda/4$ resonators, the left one (referenced 708 and hosting the first mode) is connected to ground and the right one (referenced 709 and hosting the second mode) is doubly connected to ground at references 711 and 712 to enable the preservation of symmetry while coupling to the external environment that is connected via an input line 713. The junction 701 is placed in between the two resonators at an antinode of electric field to maximize the non-linearity of the system. Alternatively, one may connect the junction at any point along each resonator transmission line to adjust the level of non-linearity (as shown on the right circuit of schematic a)). The input line 713 shares an inductance to ground with the second mode. This enables inductive coupling of the second mode to the environment and DC current bias to the input line 713 by a current source placed in ambient temperature. Thus, the current source may be connected to standard wires at room temperature, and progressively connected to superconducting wires which are in turn connected to the input line 713, so as to transfer the predetermined current (not shown here). In order to preserve the symmetries of the system, this circuit has two superconducting loops in parallel which effectively boil down to one as shown in the electrical diagram 720.

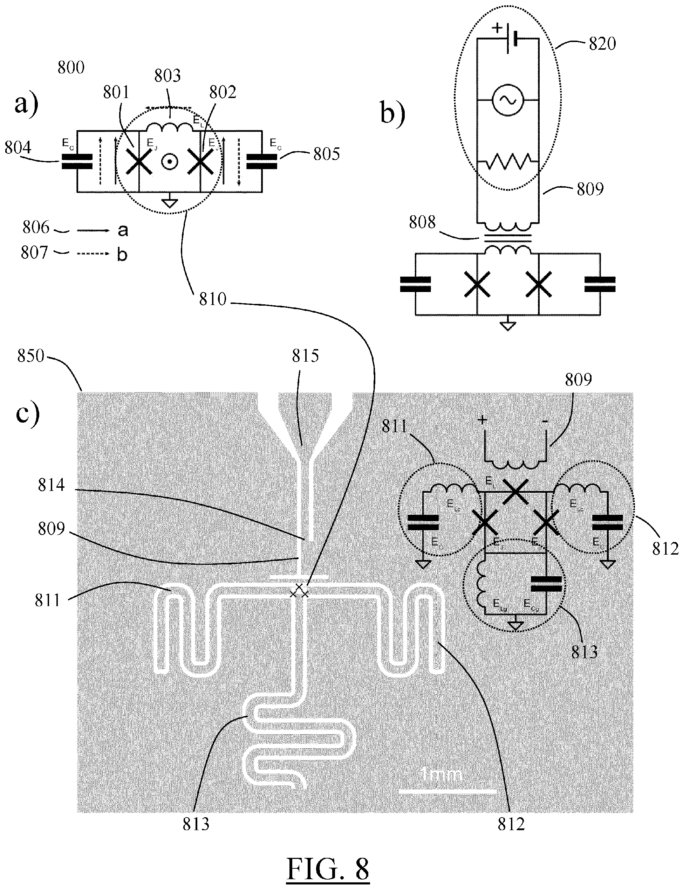

Figure 8 shows another embodiment in which the symbolic representation of the circuit comprises at least one loop that includes one or more Josephson junctions. The circuit 800 according to this example is also configured to perform the resonant 2N-to-1 photon exchange when the predetermined current is applied to induce a phase difference across the one or more Josephson junctions. Circuit 800 according to this example is particularly configured to discriminate symmetrically the first mode and the second mode. The high symmetry of the circuit achieves an improved quality of the resonant 2N-to-1 photon exchange.

With reference to schematic a) of Figure 8, an example of a circuit 800 having at least one loop 810 will now be discussed. In the circuit 800, the at least one loop 810 may include a first Josephson junction 801, a central inductive element 803, and a second Josephson junction 802 arranged in series. The central inductive element 803 may be an inductance, a single Josephson junction or an array of Josephson junctions. The central inductive element 803 may thus be arranged between the first and second Josephson junctions as a loop in series. The arrangement in series may comprise a first inner node connecting a pole of the first Josephson junction 801 with a pole of the inductive element 803. The arrangement in series may also comprise a second inner node connecting a pole of the second Josephson junction 802 with another pole of the inductive element 803. The arrangement in series may also comprise a closed-loop node connecting another pole of the first Josephson junction 801 with another pole of the second Josephson junction 802.

Said at least one loop 810 may be connected to a common ground via the closed-loop node. The circuit may also comprise a first capacitor 804 and a second capacitor 805. The first capacitor 804 may be connected in parallel with the first Josephson junction 801 between the common ground and the first inner node of the loop. The second capacitor 805 may be connected in parallel with the second Josephson junction 803 between the common ground and the second inner node of the loop.

The superconducting quantum circuit 800 is thus configured to perform intrinsically the resonant 2N-to-1 photon exchange between respectively the first mode and the second mode when the predetermined current is applied. The Josephson junctions 801 and 802 are substantially identical and the capacitive elements 804 and 805 are also substantially identical. Hence, the symmetry of the circuit implies that the actual modes of the system are the symmetric superposition 806 of the two resonators (as shown by the full arrows) and the anti-symmetric superposition 807 of the two resonators (as shown by the dashed arrows). The first mode is the symmetric superposition 806 and the second mode is the antisymmetric superposition 807. One can notice that only the second mode has a contribution across the central inductive element 803 which is advantageously used to preferentially couple the environment to this second mode while isolating the first mode from the environment.

There is no optimal bias point in this circuit. Indeed, the junction cannot be both biased to $\varphi_{DC} = \pi/2$ and maximal budget of $\varphi_{ext} = \pi$ since there has to be a non-zero phase drop across the inductor. However, this is not problematic as an optimal bias point is not desired. Indeed, at such a point, the Josephson junction acts as an open circuit and thus only the parallel Josephson capacitance remains, which is in contradiction with the fact that, in this specific embodiment, the junction serves as a primary inductive element for the symmetric mode. An optimal bias point could be enabled by adding a loop. An exemplary implementation would be in a symmetrized version of the circuits of Figures 6a and 6b where both resonators are made identical and non-linear by replacing inductance 605 by the loop 610. As proposed in Figures 6a and 6b, the coupling between the two non-linear identical resonators can be capacitive or inductive.

Here the circuit 800 consists of two identical resonators that are strongly coupled via the central inductive element. This implies that the bare (before adding the coupling) detuning between the two resonators is zero and that the perturbative description performed for circuit 600 does not hold any more. Hence, the analysis presented here is different than that of the circuit 600. Assuming the system is perfectly symmetric - that is, both junctions and both capacitances are identical -, the system may be decomposed into a symmetric mode (i.e., the first mode *a*) and a anti-symmetric mode (i.e., the second mode b). In this eigenmode basis, one can compute the contribution of each junction to the Hamiltonian of the system:

$$H_J = -E_J \cos\left(\varphi_{DC} + \varphi_a(a + a^\dagger) + \varphi_b(b + b^\dagger)\right) -$$

$$E_J \cos\left(-\varphi_{DC} + \varphi_a(a + a^\dagger) - \varphi_b(b + b^\dagger)\right)$$

which can be factored as:

$$H_J = -2\, E_J \cos(\varphi_{DC}) \cos(\varphi_a(a + a^\dagger)) \cos(\varphi_b(b + b^\dagger))$$

$$+2E_J \sin(\varphi_{DC}) \cos(\varphi_a(a + a^\dagger)) \sin(\varphi_b(b + b^\dagger))$$

The two quadratic part of the first term gives the effective inductive energy of the junction at the working point of the system $2E_J \cos(\varphi_{DC})$. Together with the charging energy of the capacitors and the inductive energy of the central inductive element, it enables to define the frequencies $\omega_a = \sqrt{16E_C E_J \cos(\varphi_{DC})}$ and $\omega_b = \sqrt{16E_C(E_J \cos(\varphi_{DC}) + 2E_L)}$ and the zero point fluctuation of the phase $\varphi_a = \left(\dfrac{E_C}{E_J \cos(\varphi_{DC})}\right)^{1/4}$ and

$$\varphi_b = \left( \frac{E_C}{E_J \cos(\varphi_{DC}) + 2E_L} \right)^{1/4}.$$

By expanding the second term at the desired order one can get the resonant 2N-to-1 photon exchange Hamiltonian $H_{NL} = \hbar g_{2N} a^{2N} b^\dagger + h.\ c.$ with $\hbar g_{2N} = 2E_J \sin(\varphi_{DC}) \dfrac{\varphi_a^{2N} \varphi_b}{2N!}$.

Because of the symmetry of the system and the frequency matching condition that must be satisfied at the bias point of the system, the expression may be further simplified. Indeed, since $2N\omega_a = \omega_b$, it can be shown that $4N^2 E_J \cos(\varphi_{DC})$ = $E_J \cos(\varphi_{DC}) + 2E_L$, and hence $\varphi_a = \sqrt{2N}\varphi_b$, leading to $\hbar g_{2N} = \sqrt{\dfrac{2}{N}} E_J \sin(\varphi_{DC}) \dfrac{\varphi_a^{2N}}{2N!}$.

Schematic b) of Figure 8 shows an example of the device used to stabilize a manifold of coherent states with the circuit 800. Looking at the figure from bottom to top, the non-linear superconducting circuit 800 lies at the bottom, and the inductive element shares a mutual inductance 808 with another inductor that terminates the environment 820 at the top. The environment 820 consists of a load, a microwave source, and a DC current source. In the same manner as explained above, the same input port of the device can conveniently be used to bring DC current for external flux and microwave radiation. In practice, a portion of transmission line is used to connect the circuit to the environment as mentioned previously. This portion of transmission line closest to the circuit 809 is typically a differential transmission line in order to preserve the symmetries of the circuit 800.

Schematic c) of Figure 8 shows an example of the planar superconducting pattern 850 and its circuit equivalent. The presented superconducting circuit is fabricated in a coplanar waveguide geometry (or CPW) where the background (greyed out part) represents the superconducting metal left on the dielectric substrate. Each cross in black represents a respective Josephson junction. By contrast with the device of schematic b), the inductive element is replaced with a single junction. In this embodiment, the central superconducting loop 810 is diluted by using three portions of CPW transmissions called stubs (811, 812, 813) in order to control the level of non-linearity of the system. On the left and on the right, open stubs 811 and 812 provide the required capacitance with some stray inductance in series. On the bottom, the ring is not directly connected to ground and a shorted stub 813 is interleaved to provide inductance to ground. The modes of the circuit and its working principle remains the same, but the lengths of transmission line added by the stubs enable to limit the level of non-linearity of the circuit. A transmission slotline 809 is used to inductively couple to the modes to the environment in order to couple preferentially to the second mode and preserve the symmetry of the circuit. A transition between CPW and slotline 814 is represented above in order to couple to the environment (and thus the current source) that have a common geometry 815 (e.g., CPW lines or coaxial cables).

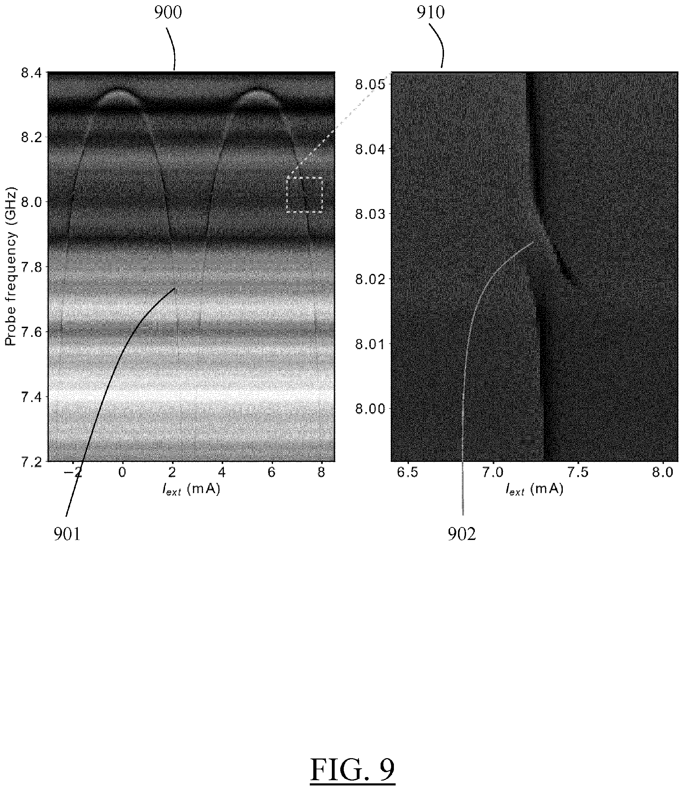

Figure 9 illustrates experimental data demonstrating the intrinsic 2-to-1 photon dynamics in a tested implementation - that is, non-linear anti-crossing when the predetermined current biases the circuit. The data has been measured on a device represented by the planar superconducting pattern 850 made out of tantalum on a sapphire substrate with Josephson junctions made of aluminum and aluminum oxide. The parameters of the symbolic representation are the following. The Josephson energy of the pair of junctions is $E_J = 250$ GHz and the central inductive element is made of a single Josephson junction with energy $E_L = 120$ GHz. The side capacitances have an energy $E_C = 40$ MHz with stray series inductance $E_{Lc} = 400$ GHz. The inductance to ground has an energy $E_{Lg} = 150$ GHz with stray capacitance $E_{Cg}$ = 125 MHz. The colormap 900 corresponds to the amplitude of the reflected microwave signal from the microwave source on the non-linear superconducting circuit as a function of the source frequency and bias current $I_{ext}$. The line 901 corresponds to the place the probe frequency matches the second mode frequency and hence shows the frequency of the second mode as a function of bias current just as in Figure 4. A zoomed portion 910 in the anti-crossing 902 happens when the two modes of the circuit fulfil the frequency matching condition $2\omega_a = \omega_b$. In this device, the bias point is around 7.3 mA.

The measurement method according to the invention will now be discussed.

Cat-qubits belong to the family of the bosonic qubits that are encoded in a harmonic oscillator that we will also call the cat-qubit mode. Contrary to two-level systems, harmonic oscillators have infinitely many levels than can be used to encode information.

Tomography is an operation that enables to get the full knowledge of the state of a quantum system. This operation requires the measurement of different observables. For a two-level system, the measurement of the observable X, Y and Z are sufficient to fully characterize the state of the system. For a harmonic oscillator that has infinitely many energy levels, one must make assumptions on the system to be able to perform the tomography with a finite number of measurements. Generally, the system is assumed to be lying within the low energy Fock states subspace. Several forms of measurements can be performed experimentally with harmonic oscillators in superconducting circuits such as the Husimi-Q function or the Wigner function and its corresponding characteristic function. These functions are defined over the phase space of the oscillator which quadratures are referred to as I and Q. One can directly measure these functions by sampling a finite portion of the phase-space. From this finite sampling and the assumption of the system being with low energy subspace, one can use maximum-likelihood algorithms to reconstruct the state of the system which finalizes the tomography.

More specific assumptions concerning the subspace in which the system lies can be made. For instance, in the cat-qubit paradigm, the coherent state manifold stabilization limits the possible states to be within the span of 2N coherent states. Hence, with this assumption, less measurements are required to perform the tomography of the system. For example, in the case of a two component cat qubit that is defined within the span of the two coherent states $\{|\alpha\rangle, |-\alpha\rangle\}$, one can either perform the full Wigner function measurement of the state or measure the effective X, Y or Z just as with a two-level physical system. The former is mostly used to tune and characterize the superconducting circuit operation and the latter during computation. In that specific case, the measurement of X is also the parity of the photon number in the state and Z is a measure of whether the population is on one or the other coherent state. Another example consists in defining a qubit in the even manifold of the span of four coherent states $\{|\alpha\rangle, |i\alpha\rangle, |-\alpha\rangle, |-i\alpha\rangle\}\}$ in the so-called four-component cat paradigm. It should be clear that measuring the full Wigner function of a system is more complete than measuring some observables while making assumptions on the possible states. As a consequence, it is generally possible to reconstruct the average values of these observables using the full Wigner function.

In the context of cat-qubits, the Wigner function or its characteristic function will usually be easier to use. Indeed, while the Husimi-Q function also contains all the information in principle it is sensitive to noise in the cat-qubit context. The Wigner function at a point $\beta$ of the phase-space can be determined by measuring the parity of the field after displacing it by an amount $-\beta$ (as shown in the article by Sun, L., Petrenko, A., Leghtas, Z. et al. "Tracking photon jumps with repeated quantum non-demolition parity measurements", Nature 511, 444-448 (2014), https://doi.org/10.1038/nature13436). The characteristic function at a point $\beta$ of the phase-space can be determined by measuring the average value of the displacement operator $D(-\beta)$ (as shown in the article by Campagne-Ibarcq, P., Eickbusch, A., Touzard, S. et al. "Quantum error correction of a qubit encoded in grid states of an oscillator", Nature 584, 368-372 (2020), https://doi.org/10.1038/s41586-020-2603-3). In the following, the Wigner function will be used because it contains more readily available information for cat-qubits. For example, in a two-component cat qubit, measuring X is the same as measuring the Wigner function in 0. However, it should be noted that the Husimi-Q function or the characteristic function of the Wigner function can also be used.

To measure the Wigner function, one needs to first displace the state of the system and then to measure the parity. Displacing the state corresponds to sending a finite duration pulse with a frequency close to the mode frequency such that the mode frequency lies within the pulse frequency spectrum. This pulse is made with a microwave source that is connected to the mode via a transmission line coupled to the mode. This coupling maybe capacitive, inductive or galvanic. The amplitude and phase of this pulse defines the amplitude and phase of the displacement. Measuring the parity can be done indirectly by coupling the mode to a two-level system and by mapping the parity of the field in the mode to the state of the two-level system. This mapping can be achieved by realizing an Hamiltonian that couples the photon number operator of the mode $a^\dagger a$ to either the Z or the X operator of the two-level system $H_Z = \hbar \frac{\chi}{2} a^\dagger a \, Z$ or $H_X = \hbar \frac{\chi}{2} a^\dagger a \, X$. The former can be achieve using the so-called dispersive interaction (Sun, L., Petrenko, A., Leghtas, Z. et al. "Tracking photon jumps with repeated quantum non-demolition parity measurements", Nature 511, 444-448 (2014), https://doi.org/10.1038/nature13436), the latter by using the so-called longitudinal interaction (see for example the article by S. Touzard, A. Kou, N. E. Frattini, et al. "Gated Conditional Displacement Readout of Superconducting Qubits" Phys. Rev. Lett. 122, 080502) that can be activated with a parametric pump at the two-level system frequency. The state of the two-level system will rotate around the Z-axis (respectively X-axis) at a speed that depends on the photon number in the mode. By tuning the duration of the interaction to $\frac{\pi}{\chi}$, one can ensure that for even photon numbers in the oscillator, the two-level system accumulates an integer number of rotations and that for odd photon number, it accumulates an half-integer number of rotation. In the case of the dispersive interaction, if the two-level system starts in state $|+\rangle$ it will end up in state $|+\rangle$ if there is an even number of photons in the mode and in state $|-\rangle$ if there is in an odd number of photons. By measuring X, one determines if the qubit is in state $|+\rangle$ or $|-\rangle$ and hence determines the photon number parity. In the case of the longitudinal interaction, if the two-level system starts in state $|0\rangle$ it will end up in state $|0\rangle$ if there is an even number of photons in the mode and in state $|1\rangle$ if there is in an odd number of photons. By measuring Z, one determines if the qubit is in state $|0\rangle$ or $|1\rangle$ and hence determines the photon number parity.

Unfortunately, the basic interaction required to perform the Wigner tomography i.e., the coupling to the photon number operator $a^\dagger a$ is incompatible with the coherent state stabilization described previously. This is also true for its characteristic function that relies eighter on the coupling to $a^\dagger a$ or $(a + a^\dagger)$. This is not accidental: it is actually a wanted effect of the stabilization mechanism, which purpose is to inhibit spurious couplings. As a result, the Wigner function cannot be measured while the cat-qubit stabilization is on.

Some measurements that are compatible with the stabilization do exist, for instance it is possible to determine in which stabilized coherent state the system is by coupling the mode to a heterodyne detector (or homodyne detector if there are only 2 coherent states).

For a two-component cat-qubit, this would correspond to the measurement of Z. However, even though in theory, one could measure as well X, Y of a two-component cat state while the stabilization is on, the measurement of X and Y would require the engineering of a non-local Hamiltonian which is only at a theoretical proposal stage. As explained earlier measuring X experimentally boils down to a parity measurement which relies on interactions that are protected against by the stabilization just as in the Wigner tomography case.

For a four-component cat-qubit, measuring in which stabilized coherent state the system is would not measure an observable of the qubit and project the system out of the code-space.

Hence, one can only perform a few measurements while the stabilization is on and this set of measurements does not cover the needs for calibration or quantum computation.

In prior art, this problem is solved for stabilized two-component cat-qubits that rely on parametric pumping by simply turning off the parametric pump which enables the 2-to-1 photon exchange that is the key ingredient of the stabilization. In the case of the resonant cat qubit circuits described above, the intrinsically resonant nature of the stabilizing mechanism makes it impossible to use this solution since no parametric pump is required. The energy preservation is built-in as the buffer mode is tuned to have twice the frequency of the cat-qubit mode. Consequently, 2-to-1 photon exchange dynamics is always on.

With a resonant cat-qubit circuit, the 2N-coherent state manifold stabilization is enabled by a single-photon drive on the buffer and single-photon loss of the buffer. The single-photon drive can easily be controlled with the microwave source, however the single-photon loss is built-in. This entails that in the context of the resonant cat-qubit circuit, one can easily control the 2N-photon drive, but not the 2N-photon losses.

In the context of two-component cat-qubits, the Applicant has thus experimented with the two-photon drive control. In doing so, the Applicant discovered that when only the two-photon loss is active, the stable manifold of the cat-qubit mode becomes the span of the $|0\rangle$ and $|1\rangle$ Fock states. In the following, we call this manifold the no-drive manifold as opposed to the driven manifold which comprises the coherent states, $\{|\alpha\rangle, |-\alpha\rangle\}$ in the case of the two-component cat-qubit. This means that whatever state the cat-qubit starts in, it will be projected by dissipation to the no-drive manifold over a time scale $1/\kappa_2$. Advantageously, this projection preserves the parity. Indeed, since the cat-qubit mode loses photons 2 by 2, the parity does not change during this process. Furthermore, when only the two-photon loss is on, the coupling to the photon number operator $a^\dagger a$ becomes possible again since there is no preferred phase in the cat-qubit mode and the states can then freely rotate. This means that one can measure in which Fock state the mode ends up into. This can be generalized to more states. If only 2N-photon dissipation is active, the initial state of the cat-qubit mode is projected by dissipation to a new stable manifold which consists in the span of $\{|0\rangle, |1\rangle, ..., |2N-1\rangle\}$. This projection preserves the photon number modulo 2N and one can eventually measure the photon number in newly stabilized no-drive manifold. This may at first sight look akin to the situation of the Kerr-cat qubit situation described in article by Grimm, A., Frattini, N.E., Puri, S. et al. "Stabilization and operation of a Kerr-cat qubit", Nature 584, 205-209 (2020), https://doi.org/10.1038/s41586-020-2587-z. However, there are two significant differences which would hinder the man skilled in the art from considering this method:

- in the Kerr-cat case, the mapping requires turning-off a parametric pump,
- the turn-off of this pump has to be adiabatic compared to the confinement rate, which would be ineffective in the present case.

To measure properties of the photon number distribution in the no-drive manifold, one can use several techniques known in the field.

The following is a list of examples in the two-component cat-qubit paradigm where the no-drive manifold is the span of $\{|0\rangle, |1\rangle\}$:

- measuring the parity of the photon number distribution, one can use a coupled two-level system as described previously. It can be noted that in the case of a $\{|0\rangle, |1\rangle\}$ manifold stabilized by 2-photon dissipation, parity is directly related to the photon number;
- measuring if the cat-qubit mode is in a specific photon number state, one can use a two-level system coupled dispersively as known in the field (see for example the article by Hofheinz, M., Weig, E., Ansmann, M. et al. "Generation of Fock states in a superconducting quantum circuit", Nature 454, 310-314 (2008). https://doi.org/10.1038/nature07136) by sending a frequency selective pulse on the two-level system. Since there are only 2 Fock state in this manifold, the result of the measurement entirely describes the photon number);
- measuring in which Fock state the cat-qubit mode is by engineering a dispersive coupling to a linear mode that is coupled to a heterodyne or homodyne detector (see for example the article by S. Touzard, A. Kou, N. E. Frattini, et al. "Gated Conditional Displacement Readout of Superconducting Qubits" Phys. Rev. Lett. 122, 080502);
- provided the cat-qubit mode has a slight anharmonicity, measuring in which Fock state the cat-qubit mode is by dispersive coupling with a linear mode to it (see for example the article by Wallraff, A., Schuster, D., Blais, A. et al. "Strong coupling of a single photon to a superconducting qubit using circuit quantum electrodynamics", Nature 431, 162-167 (2004). https://doi.org/10.1038/nature02851).

Hence for a resonant two-component cat-qubits circuit, a method is available for measuring Z and X, Y being mapped easily to X. Measuring these three observables is sufficient to know the full state of the system if it is assumed that the system lies in the two-component cat-qubits manifold. As a reminder, Z can be measured by heterodyne or homodyne detection while the stabilization is on and X, that is also the photon number parity, can be mapped to the measurement of Fock state $|0\rangle$ and $|1\rangle$.

For a four-component cat-qubit, the no-drive manifold consists in the span of the Fock states $\{|0\rangle, |1\rangle, |2\rangle, |3\rangle\}$ and the initial state of the cat-qubit mode gets projected to this manifold while preserving the photon number modulo 4. In this manifold, the parity can be measured to learn if the cat-qubit mode state is with the cat-qubit (even) or error (odd) manifold. Assuming the state is within the cat-qubit manifold, one can measure whether there are 0 or 2 photons modulo 4. This measurement is equivalent to a Z measurement of the four-component cat-qubit (Mirrahimi M., et al. "Dynamically protected cat-qubits: a new paradigm for universal quantum computation" 2014 New J. Phys. 16 045014).

If one wants more information on the system or equivalently to rely on less assumptions, a full Wigner measurement ought to be performed as discussed earlier. As a reminder, this requires the measurement of the parity after a displacement, the displacement being scanned across the phase-space of the mode. The displacement is characterized by the Hamiltonian $H_d = \hbar\epsilon_d^* a + \hbar\epsilon_d a^\dagger$ applied for a duration $t_d$. Provided the displacement is sudden and powerful enough, i.e., that $\epsilon_d > \kappa_{2N}$ and that $t_d < 1/\kappa_{2N}$, it will overcome the 2N-photon stabilization and displace the state. The complex amplitude of the resulting displacement $\beta$ can be controlled by the complex amplitude $\epsilon_d$ of the microwave source used for the displacement and the duration of the displacement pulse $t_d$. Then if the 2N-photon drive is turned off, the system will converge to the no-drive manifold $\{|0\rangle, 11), ..., |2N - 1\rangle\}$ in which a parity measurement can be made since we are now able to couple to the photon number operator $a^\dagger a$.

One should note that the reverse operation is possible i.e., by turning back on the single-photon drive on the buffer mode one will map the no-drive manifold to the driven manifold while preserving the photon number modulo 2N. For example, in the two-component cat-qubit paradigm, starting in Fock state $|0\rangle$ will lead to the $|+\rangle$ cat-qubit state or even state and starting in Fock state $|1\rangle$ will lead to the $|-\rangle$ cat-qubit state or odd state. If one performs a QND measurement on the no-drive manifold, this ensures a QND measurement of the X operator of a two-component cat-qubit.

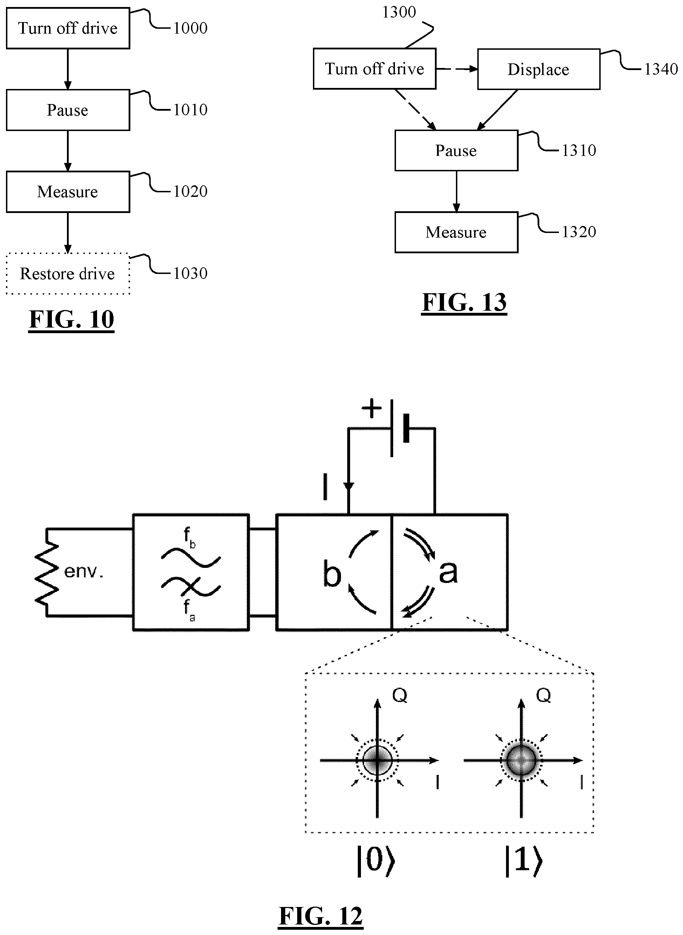

As a result, the Applicant devised the method shown on Figure 10 to perform a quantum non-demolition (QND) measurement in a device comprising a resonant cat-qubit circuit hosting a cat-qubit.

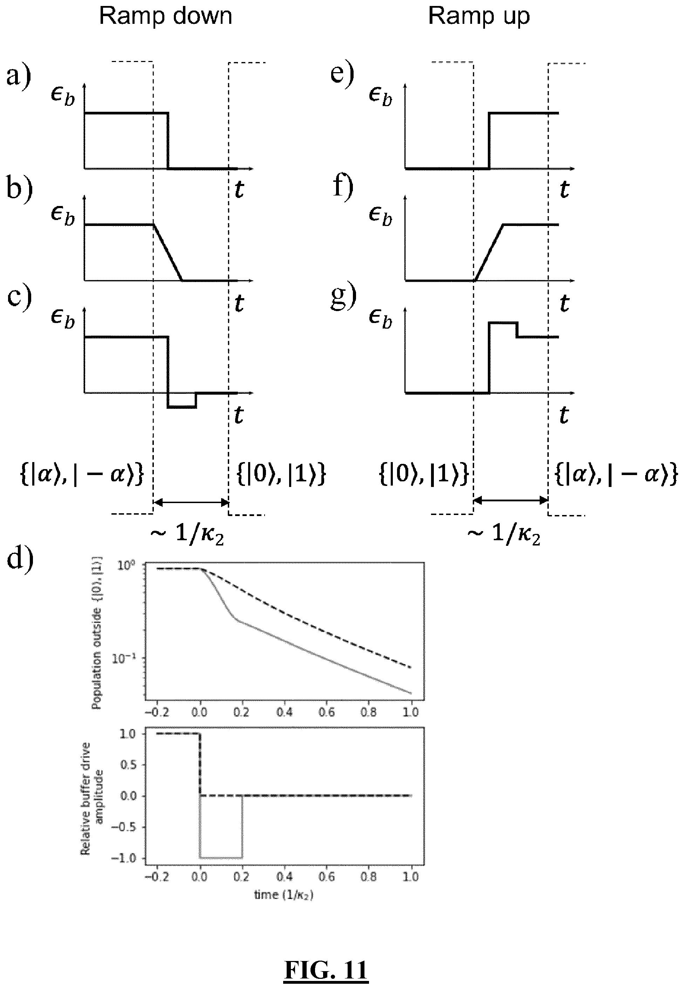

The QND measurement starts with an operation 1000 in which the drive on the buffer is turned off. As a result, the two-photon drive on the resonant cat-qubit is turned off, and only the two-photon loss is active. Operation 1000 can be performed either by turning off the microwave source which provides the radiation for driving the second mode. Turning off the drive can be done by applying specific microwave radiation sequences exemplified on Figure 11.

In schematic a) of Figure 11, according to a first embodiment, the microwave radiation is brought to zero abruptly. This corresponds to turning off the microwave source.

In schematic b) of Figure 11, according to another embodiment, the microwave source is ramped down to zero, due to the finite bandwidth of both the microwave source and the microwave path for the drive.

In schematic c) of Figure 11, according to a preferred embodiment, the microwave radiation is brought to a negative level before being brought to zero. This allows to achieve the convergence to the no-drive manifold in the fastest manner. The negative level of the drive is of similar absolute value than the stabilization drive even though greater values are obviously available. When tuned appropriately, this embodiment allows to reach the no-drive manifold faster than with the embodiments of schematic a) and b) as shown in schematic d) described below.

Schematic d) of Figure 11 shows a simulation of the performance of the embodiment of schematic c) compared to the one of schematic a) two-component cat-qubit with amplitude $\alpha = 2$ starting from the center of the Bloch sphere of the driven manifold. As the transition to the no-drive manifold progresses, the remaining population outside the no-drive manifold is shown together with the corresponding time-dependent buffer drive amplitude relative to the stabilization drive amplitude $\epsilon_b$. This schematic shows that the embodiment of schematic c) where the buffer drive amplitude undershoots converges faster to the no-drive manifold.

In yet an alternative embodiment, operation 1000 can be performed by turning off the coupling between the microwave source and the resonant cat-qubit circuit instead of the microwave source itself. In this manner, turning off of the drive is again achieved, which enables performing the tomography. In a preferred manner, such decoupling is done while preserving the coupling of the resonant cat-qubit circuit to the current source and the load.

After operation 1000 has been performed, a pause is made in an operation 1010. This pause lasts for a duration comprised between $\left[\dfrac{1}{\kappa_{2N}} ; \dfrac{10}{\kappa_{2N}}\right]$. This allows the encoding of the stabilized cat-qubit to converge to the no-drive manifold, as shown in Figure 12 for the two-component cat-qubit.

Finally, a property of the photon number distribution of the cat-qubit mode restricted to no-drive manifold may be measured in an operation 1020, for example by measuring the photon number parity. This measurement can be performed in multiple known manners, as evidenced in the articles listed above. Alternatively, operation 1020 can measure whether the number of photons is zero. This measurement can be performed in multiple known manners, as evidenced in the articles listed above.

In the case of the two-component cat qubit, because the parity is preserved by the dissipative projection onto the no-drive manifold {|0⟩, |1⟩} operation 1010 maps the X operator of the cat-qubit to the photon number operator within the no-drive manifold. As a result, the measurement of operation 1020 is effectively a measurement of operator X of the cat-qubit.

Once the measurement of operation 1020 has been performed, the drive on the second mode can be reinstated in an operation 1030, thereby re-stabilizing the cat-qubit. Operation 1030 is particularly advantageous when the photon number measurement of operation 1020 is QND, as it allows the whole process to be QND by remapping the no-drive manifold to the cat-qubit manifold. Schematics e) to g) of Figure 11 show various embodiments for performing the microwave source ramp up of operation 1030. These schematics correspond respectively to the ramp down embodiments shown on schematics a) to c) of Figure 11.

This operation may be omitted, particularly where the operation 1020 is not QND.

The measurement method of Figure 10 is particularly useful when using the device within a quantum algorithm. However, as such, it is limited to measuring the X operator in the context of two-component cat-qubit. Figure 13 shows another embodiment of the method according to the invention which allows to perform more complete tomography.

The method of Figure 13 is very similar to the method of Figure 10. For that reason, only the differences will be described, and the operations of Figures 10 and 13 bearing the same final two digits will be considered identical.

The main difference between Figure 13 and 10 lies in the application of an operation 1340. In operation 1340, the field in the cat-qubit hosting circuit is displaced by means of a short and strong pulse able to overcome the stabilization mechanism of the resonant cat-qubit circuit. In the embodiment described here, such a pulse can be achieved in the manner described above. The displacement induced in this operation is characterized by its complex amplitude $\beta$.

In a preferred embodiment, operation 1340 is performed prior to operation 1300. In an alternative embodiment, operation 1340 and 1300 are performed concurrently. After operations 1340 and 1300 have been performed, pausing operation 1310 and measurement operation 1320 are performed.

The combination of the displacement of operation 1340 with operations 1300 to 1320 effectively measures the parity of the displaced field of the cat-qubit mode. By definition, this measures the value of the Wigner function in $-\beta$.

In this case, the method is not QND due to the displacement, and the re-instatement of the drive of operation 1030 is not performed. In order to perform the complete tomography, the cat-qubit will have to be re-prepared, and operations 1340 and 1300 to 1320 will have to be repeated with other values of $\beta$. In this manner, by fixing the parameters of operation of the resonant cat-qubit circuit, a full tomography can be performed. Thereafter, this full tomography can be used to modify the parameters of operation of the resonant cat-qubit circuit to tune it until the proper features are achieved.

## Claims

1. A quantum measurement method for a device comprising a non-linear superconducting quantum circuit (100, 600, 700, 800) having a first mode and a second mode each having a respective resonant frequency and a symbolic representation which comprises at least one loop (610, 710, 810) that includes one or more Josephson junctions (601, 701, 801-802),

   said non-linear superconducting quantum circuit being configured such that, when a predetermined current of a constant intensity is applied, the resonant frequency of the second mode is substantially 2N times the resonant frequency of the first mode, a phase difference is induced across the one or more Josephson junctions (601, 701, 801-802), such that the non-linear superconducting quantum circuit has an Hamiltonian expandable into a sum between at least a dominant term of the form $\hbar g_{2N} a^{2N} b^\dagger + \hbar g_{2N}^* a^{\dagger 2N} b$ and a series of subsidiary terms, where $g_{2N}$ is a scalar corresponding to the intrinsic coupling strength, $a$ is the annihilation operator of the first mode, b is the annihilation operator of the second mode, and $\hbar$ is the reduced Planck constant, thereby performing intrinsically a resonant 2N-to-1 photon exchange between respectively the first mode and the second mode, N being a positive integer, and
   said device further comprising a current source configured to provide said predetermined current of a constant intensity, a microwave source configured to apply a microwave radiation at a frequency substantially equal to the resonant frequency of the second mode or 2N times the resonant frequency of the first mode and coupled to said non-linear superconducting quantum circuit to drive said second mode, and a load coupled substantially only to said second mode,
   the method comprising the following operations:

      1) turning off the drive of said second mode,

2) pausing for a duration comprised between $\left[\frac{1}{\kappa_{2N}}; \frac{10}{\kappa_{2N}}\right]$ s, where $\kappa_{2N}$ is the rate of the 2N-photon dissipation of said non-linear superconducting circuit in rad.s$^{-1}$,

3) performing a quantum measurement to determine a property of the photon number distribution on the first mode of the circuit.

2. Quantum measurement method according to claim 1, wherein operation 1) comprises applying a square pulse shape to bringing the amplitude drive from its nominal stabilization value to 0.

3. Quantum measurement method according to claim 1, wherein operation 1) comprises applying two consecutive square pulse shapes, the first one bringing said the amplitude drive from its nominal stabilization value to a negative value substantially equal or greater than the nominal stabilization absolute value, and the second one bringing the current from this value to 0.

4. Quantum measurement according to one of the preceding claims, wherein operation 3) is a quantum nondemolition measurement, and further comprising the following operation:

4) restoring the drive of said second mode after operation 3) is performed.

5. Quantum measurement method according to claim 4, wherein operation 4) comprises applying a square pulse shape to bring the amplitude drive from 0 to the nominal stabilization value.

6. Quantum measurement method according to claim 4, wherein operation 4) comprises applying two consecutive square pulse shapes, the first one bringing said amplitude drive from 0 to a value substantially comprised between one and ten times the nominal stabilization value, and the second one bringing amplitude drive from this value to the nominal stabilization value.

7. Method according to one of the preceding claims, further comprising the following operation:

0) applying on the first mode an electromagnetic pulse having a frequency substantially equal to the resonant frequency of the first mode which has an amplitude superior to $\kappa_{2N}$ and a duration lesser than $1/\kappa_{2N}$.

8. Method according to claim 7, wherein operation 0) is performed before operation 1).

9. Method according to claim 7, wherein operation 0) and operation 1) are performed concurrently.

10. Quantum tomography method, comprising the following operations:

a) obtaining a set of complex displacements defining a displacement amplitude and a displacement phase scanning the phase space of the cat-qubit mode,

b) preparing a state in the cat-qubit mode based on a chosen set of parameters for the operation of a device comprising a non-linear superconducting quantum circuit (100, 600, 700, 800) having a first mode and a second mode each having a respective resonant frequency and a symbolic representation which comprises at least one loop (610, 710, 810) that includes one or more Josephson junctions (601, 701, 801-802),

said non-linear superconducting quantum circuit being configured such that, when a predetermined current of a constant intensity is applied, the resonant frequency of the second mode is substantially 2N times the resonant frequency of the first mode, a phase difference is induced across the one or more Josephson junctions (601, 701, 801-802), such that the non-linear superconducting quantum circuit has an Hamiltonian expandable into a sum between at least a dominant term of the form $\hbar g_{2N} a^{2N} b^{\dagger} + \hbar g_{2N}^{*} a^{\dagger 2N} b$ and a series of subsidiary terms, where $g_{2N}$ is a scalar corresponding to the intrinsic coupling strength, $a$ is the annihilation operator of the first mode, b is the annihilation operator of the second mode, and $\hbar$ is the reduced Planck constant, thereby performing intrinsically a resonant 2N-to-1 photon exchange between respectively the first mode and the second mode, N being a positive integer, and

said device further comprising a current source configured to provide said predetermined current of a constant intensity, a microwave source configured to apply a microwave radiation at a frequency substantially equal to the resonant frequency of the second mode or 2N times the resonant frequency of the first mode and coupled to said non-linear superconducting quantum circuit to drive said second mode, and a load coupled substantially only to said second mode,

c) for a given complex displacement in the set of complex displacements, applying the method of one of claims 7 to 9 using the associated displacement amplitude and displacement phase to define the amplitude, the duration and the phase of the electromagnetic pulse of step 0),

d) repeating operation b) and operation c) with a different complex displacement.

11. Quantum device operation tuning method comprising:

a) obtaining a plurality of set of parameters for the operation of a quantum device,

b) for each set of parameters of operation a), performing the method of claim 10, and

c) deriving a tuned set of parameters based on the results of operation b).

12. A quantum computing device comprising a non-linear superconducting quantum circuit (100, 600, 700, 800) having a first mode and a second mode each having a respective resonant frequency and a symbolic representation which comprises at least one loop (610, 710, 810) that includes one or more Josephson junctions (601, 701, 801-802),

said non-linear superconducting quantum circuit being configured such that, when a predetermined current of a constant intensity is applied, the resonant frequency of the second mode is substantially 2N times the resonant frequency of the first mode, a phase difference is induced across the one or more Josephson junctions (601, 701, 801-802), such that the non-linear superconducting quantum circuit has an Hamiltonian expandable into a sum between at least a dominant term of the form $\hbar g_{2N} a^{2N} b^\dagger + \hbar g_{2N}^* a^{\dagger 2N} b$ and a series of subsidiary terms, where $g_{2N}$ is a scalar corresponding to the intrinsic coupling strength, $a$ is the annihilation operator of the first mode, b is the annihilation operator of the second mode, and $\hbar$ is the reduced Planck constant, thereby performing intrinsically a resonant 2N-to-1 photon exchange between respectively the first mode and the second mode, N being a positive integer, and

said device further comprising a current source configured to provide said predetermined current of a constant intensity, a microwave source configured to apply a microwave radiation at a frequency substantially equal to the resonant frequency of the second mode or 2N times the resonant frequency of the first mode and coupled to said non-linear superconducting quantum circuit to drive said second mode, and a load coupled substantially only to said second mode,

wherein said device is configured to be operated using a tuned set of parameters determined by the method of claim 11.

13. A quantum computing device comprising a non-linear superconducting quantum circuit (100, 600, 700, 800) having a first mode and a second mode each having a respective resonant frequency and a symbolic representation which comprises at least one loop (610, 710, 810) that includes one or more Josephson junctions (601, 701, 801-802),

said non-linear superconducting quantum circuit being configured such that, when a predetermined current of a constant intensity is applied, the resonant frequency of the second mode is substantially 2N times the resonant frequency of the first mode, a phase difference is induced across the one or more Josephson junctions (601, 701, 801-802), such that the non-linear superconducting quantum circuit has an Hamiltonian expandable into a sum between at least a dominant term of the form $\hbar g_{2N} a^{2N} b^\dagger + \hbar g_{2N}^* a^{\dagger 2N} b$ and a series of subsidiary terms, where $g_{2N}$ is a scalar corresponding to the intrinsic coupling strength, $a$ is the annihilation operator of the first mode, b is the annihilation operator of the second mode, and $\hbar$ is the reduced Planck constant, thereby performing intrinsically a resonant 2N-to-1 photon exchange between respectively the first mode and the second mode, N being a positive integer, and

said device further comprising a current source configured to provide said predetermined current of a constant intensity, a microwave source configured to apply a microwave radiation at a frequency substantially equal to the resonant frequency of the second mode or 2N times the resonant frequency of the first mode and coupled to said non-linear superconducting quantum circuit to drive said second mode, and a load coupled substantially only to said second mode,

wherein said device is configured to perform the method of claims 1 to 6.

**Patentansprüche**

1. Quantenmessverfahren für eine Vorrichtung, die eine nichtlineare supraleitende Quantenschaltung (100, 600, 700, 800) umfasst, die einen ersten Modus und einen zweiten Modus aufweist, die jeweils eine jeweilige Resonanzfrequenz und eine symbolische Darstellung aufweisen, und die mindestens eine Schleife (610, 710, 810) umfasst, die einen oder mehrere Josephson-Übergänge (601, 701, 801-802) enthält,

   wobei die nichtlineare supraleitende Quantenschaltung so konfiguriert ist, dass, wenn ein vorbestimmter Strom einer konstanten Intensität angelegt wird, die Resonanzfrequenz des zweiten Modus im Wesentlichen das 2N-Fache der Resonanzfrequenz des ersten Modus beträgt, eine Phasendifferenz über den einen oder die mehreren Josephson-Übergänge (601, 701, 801-802) induziert wird, so dass die nichtlineare supraleitende Quantenschaltung einen Hamilton-Operator aufweist, der in eine Summe zwischen mindestens einem domi-

   nanten Term der Form $\hbar g_{2N} a^{2N} b^{\dagger} + \hbar g_{2N}^{*} a^{\dagger 2N} b$ und einer Reihe untergeordneter Terme erweiterbar ist,

   wobei $g_{2N}$ ein Skalar der intrinsischen Kopplungsstärke entspricht, $a$ der Vernichtungsoperator des ersten Modus ist, b der Vernichtungsoperator des zweiten Modus ist und $\hbar$ die reduzierte Planck-Konstante ist, wodurch intrinsisch ein resonanter 2N-zu-1-Photonenaustausch zwischen dem ersten Modus und dem zweiten Modus durchgeführt wird, wobei N eine positive Ganzzahl ist, und

   wobei die Vorrichtung ferner eine Stromquelle, die so konfiguriert ist, dass sie den vorbestimmten Strom mit konstanter Intensität bereitstellt, eine Mikrowellenquelle, die so konfiguriert ist, dass sie eine Mikrowellenstrahlung mit einer Frequenz anwendet, die im Wesentlichen gleich der Resonanzfrequenz des zweiten Modus oder dem 2N-Fachen der Resonanzfrequenz des ersten Modus ist, und mit der nichtlinearen supraleitenden Quantenschaltung gekoppelt ist, um den zweiten Modus anzutreiben, und eine Last umfasst, die im Wesentlichen nur mit dem zweiten Modus gekoppelt ist,

   wobei das Verfahren die folgenden Operationen umfasst:

   1) Ausschalten des Antriebs des zweiten Modus,

   2) Pausieren für eine Dauer zwischen $\left[\frac{1}{\kappa_{2N}}; \frac{10}{\kappa_{2N}}\right]$ s, wobei $\kappa_{2N}$ die Rate der 2N-Photonendissipation der nichtlinearen supraleitenden Schaltung in rad.s$^{-1}$ ist,

   3) Durchführen einer Quantenmessung, um eine Eigenschaft der Photonenzahlverteilung auf dem ersten Modus der Schaltung zu bestimmen.

2. Quantenmessverfahren nach Anspruch 1, wobei die Operation 1) das Anwenden einer Rechteckimpulsform umfasst, um den Amplitudenantrieb von seinem Nennstabilisierungswert auf 0 zu bringen.

3. Quantenmessverfahren nach Anspruch 1, wobei die Operation 1) das Anwenden von zwei aufeinanderfolgenden Rechteckimpulsformen umfasst, wobei die erste den Amplitudenantrieb von seinem Nennstabilisierungswert auf einen negativen Wert bringt, der im Wesentlichen gleich oder größer als der Nennstabilisierungsabsolutwert ist, und die zweite den Strom von diesem Wert auf 0 bringt.

4. Quantenmessung nach einem der vorhergehenden Ansprüche, wobei die Operation 3) eine zerstörungsfreie Quantenmessung ist und ferner die folgende Operation umfasst:
   4) Wiederherstellen des Antriebs des zweiten Modus, nachdem die Operation 3) durchgeführt wurde.

5. Quantenmessverfahren nach Anspruch 4, wobei die Operation 4) das Anwenden einer Rechteckimpulsform umfasst, um den Amplitudenantrieb von 0 auf den Nennstabilisierungswert zu bringen.

6. Quantenmessverfahren nach Anspruch 4, wobei die Operation 4) das Anwenden von zwei aufeinanderfolgenden Rechteckimpulsformen umfasst, wobei die erste den Amplitudenantrieb von 0 auf einen Wert bringt, der im Wesentlichen zwischen dem Ein- und Zehnfachen des Nennstabilisierungswerts liegt, und die zweite den Amplitudenantrieb von diesem Wert auf den Nennstabilisierungswert bringt.

7. Verfahren nach einem der vorhergehenden Ansprüche, das ferner die folgende Operation umfasst:
   0) Anlegen eines elektromagnetischen Impulses im ersten Modus mit einer Frequenz, die im Wesentlichen gleich der Resonanzfrequenz des ersten Modus ist, die eine Amplitude von mehr als $\kappa_{2N}$ und eine Dauer von weniger als $1/\kappa_{2N}$ aufweist.

8. Verfahren nach Anspruch 7, wobei die Operation 0) vor der Operation 1) durchgeführt wird.

9. Verfahren nach Anspruch 7, wobei die Operation 0) und die Operation 1) gleichzeitig durchgeführt werden.

10. Quantentomografieverfahren, das die folgenden Operationen umfasst:

a) Erhalten eines Satzes komplexer Verschiebungen, die eine Verschiebungsamplitude und eine Verschiebungsphase definieren, die den Phasenraum des Cat-Qubit-Modus scannen,
b) Vorbereiten eines Zustands im Cat-Qubit-Modus basierend auf einem ausgewählten Satz von Parametern für den Betrieb einer Vorrichtung, die eine nichtlineare supraleitende Quantenschaltung (100, 600, 700, 800) umfasst, die einen ersten Modus und einen zweiten Modus aufweist, die jeweils eine jeweilige Resonanzfrequenz und eine symbolische Darstellung aufweisen, und die mindestens eine Schleife (610, 710, 810) umfasst, die einen oder mehrere Josephson-Übergänge (601, 701, 801-802) enthält,

wobei die nichtlineare supraleitende Quantenschaltung so konfiguriert ist, dass, wenn ein vorbestimmter Strom einer konstanten Intensität angelegt wird, die Resonanzfrequenz des zweiten Modus im Wesentlichen das 2N-Fache der Resonanzfrequenz des ersten Modus beträgt, eine Phasendifferenz über den einen oder die mehreren Josephson-Übergänge (601, 701, 801-802) induziert wird,
so dass die nichtlineare supraleitende Quantenschaltung einen Hamilton-Operator aufweist, der in eine Summe zwischen mindestens einem dominanten Term der Form $\hbar g_{2N} a^{2N} b^{\dagger} + \hbar g_{2N}^{*} a^{\dagger 2N} b$ und einer Reihe untergeordneter Terme erweiterbar ist, wobei $g_{2N}$ ein Skalar ist, der der intrinsischen Kopplungsstärke entspricht, $a$ der Vernichtungsoperator des ersten Modus ist, b der Vernichtungsoperator des zweiten Modus ist und $\hbar$ die reduzierte Planck-Konstante ist, wodurch intrinsisch ein resonanter 2N-zu-1-Photonenaustausch zwischen dem ersten Modus bzw. dem zweiten Modus durchgeführt wird, wobei N eine positive Ganzzahl ist, und
wobei die Vorrichtung ferner eine Stromquelle, die so konfiguriert ist, dass sie den vorbestimmten Strom mit konstanter Intensität bereitstellt, eine Mikrowellenquelle, die so konfiguriert ist, dass sie eine Mikrowellenstrahlung mit einer Frequenz anwendet, die im Wesentlichen gleich der Resonanzfrequenz des zweiten Modus oder dem 2N-Fachen der Resonanzfrequenz des ersten Modus ist, und mit der nichtlinearen supraleitenden Quantenschaltung gekoppelt ist, um den zweiten Modus anzutreiben, und eine Last umfasst, die im Wesentlichen nur mit dem zweiten Modus gekoppelt ist,

c) für eine gegebene komplexe Verschiebung in dem Satz komplexer Verschiebungen, Anwenden des Verfahrens nach einem der Ansprüche 7 bis 9 unter Verwendung der zugehörigen Verschiebungsamplitude und Verschiebungsphase, um die Amplitude, die Dauer und die Phase des elektromagnetischen Impulses von Schritt 0) zu definieren,
d) Wiederholen von Operation b) und Operation c) mit unterschiedlicher komplexer Verschiebung.

11. Verfahren zum Abstimmen des Betriebs von Quantenvorrichtungen, umfassend:

a) Erhalten einer Vielzahl von Sätzen von Parametern für den Betrieb einer Quantenvorrichtung,
b) für jeden Satz von Parametern von Operation a), Durchführen des Verfahrens nach Anspruch 10, und
c) Ableiten eines abgestimmten Satzes von Parametern basierend auf den Ergebnissen der Operation b).

12. Quantencomputervorrichtung, die eine nichtlineare supraleitende Quantenschaltung (100, 600, 700, 800) umfasst, die einen ersten Modus und einen zweiten Modus aufweist, die jeweils eine jeweilige Resonanzfrequenz und eine symbolische Darstellung aufweisen, und die mindestens eine Schleife (610, 710, 810) umfasst, die einen oder mehrere Josephson-Übergänge (601, 701, 801-802) enthält,

wobei die nichtlineare supraleitende Quantenschaltung so konfiguriert ist, dass, wenn ein vorbestimmter Strom einer konstanten Intensität angelegt wird, die Resonanzfrequenz des zweiten Modus im Wesentlichen das 2N-Fache der Resonanzfrequenz des ersten Modus beträgt, eine Phasendifferenz über den einen oder die mehreren Josephson-Übergänge (601, 701, 801-802) induziert wird, so dass die nichtlineare supraleitende Quantenschaltung einen Hamilton-Operator aufweist, der in eine Summe zwischen mindestens einem dominanten Term der Form $\hbar g_{2N} a^{2N} b^{\dagger} + \hbar g_{2N}^{*} a^{\dagger 2N} b$ und einer Reihe untergeordneter Terme erweiterbar ist, wobei $g_{2N}$ ein Skalar ist, der der intrinsischen Kopplungsstärke entspricht, $a$ der Vemichtungsoperator des ersten Modus ist, *b* der Vernichtungsoperator des zweiten Modus ist und $\hbar$ die reduzierte Planck-Konstante ist, wodurch intrinsisch ein resonanter 2N-zu-1-Photonenaustausch zwischen dem ersten Modus und dem zweiten Modus durchgeführt wird, wobei N eine positive Ganzzahl ist, und

wobei die Vorrichtung ferner eine Stromquelle, die so konfiguriert ist, dass sie den vorbestimmten Strom mit konstanter Intensität bereitstellt, eine Mikrowellenquelle, die so konfiguriert ist, dass sie eine Mikrowellenstrahlung mit einer Frequenz anwendet, die im Wesentlichen gleich der Resonanzfrequenz des zweiten Modus oder dem 2N-Fachen der Resonanzfrequenz des ersten Modus ist, und mit der nichtlinearen supraleitenden Quantenschaltung gekoppelt ist, um den zweiten Modus anzutreiben, und eine Last umfasst, die im Wesentlichen nur mit dem zweiten Modus gekoppelt ist, wobei die Vorrichtung so konfiguriert ist, dass sie mithilfe eines abgestimmten Satzes von Parametern betrieben wird, der durch das Verfahren nach Anspruch 11 bestimmt wird.

13. Quantencomputervorrichtung, die eine nichtlineare supraleitende Quantenschaltung (100, 600, 700, 800) umfasst, die einen ersten Modus und einen zweiten Modus aufweist, die jeweils eine jeweilige Resonanzfrequenz und eine symbolische Darstellung aufweisen, und die mindestens eine Schleife (610, 710, 810) umfasst, die einen oder mehrere Josephson-Übergänge (601, 701, 801-802) enthält,

wobei die nichtlineare supraleitende Quantenschaltung so konfiguriert ist, dass, wenn ein vorbestimmter Strom einer konstanten Intensität angelegt wird, die Resonanzfrequenz des zweiten Modus im Wesentlichen das 2N-Fache der Resonanzfrequenz des ersten Modus beträgt, eine Phasendifferenz über den einen oder die mehreren Josephson-Übergänge (601, 701, 801-802) induziert wird, so dass die nichtlineare supraleitende Quantenschaltung einen Hamilton-Operator aufweist, der in eine Summe zwischen mindestens einem dominanten Term der Form $\hbar g_{2N} a^{2N} b^\dagger + \hbar g_{2N}^* a^{\dagger 2N} b$ und einer Reihe untergeordneter Terme erweiterbar ist, wobei $g_{2N}$ ein Skalar ist, der der intrinsischen Kopplungsstärke entspricht, *a* der Vernichtungsoperator des ersten Modus ist, *b* der Vernichtungsoperator des zweiten Modus ist und $\hbar$ die reduzierte Planck-Konstante ist, wodurch intrinsisch ein resonanter 2N-zu-1-Photonenaustausch zwischen dem ersten Modus und dem zweiten Modus durchgeführt wird, wobei N eine positive Ganzzahl ist, und

wobei die Vorrichtung ferner eine Stromquelle, die so konfiguriert ist, dass sie den vorbestimmten Strom mit konstanter Intensität bereitstellt, eine Mikrowellenquelle, die so konfiguriert ist, dass sie eine Mikrowellenstrahlung mit einer Frequenz anwendet, die im Wesentlichen gleich der Resonanzfrequenz des zweiten Modus oder dem 2N-Fachen der Resonanzfrequenz des ersten Modus ist, und mit der nichtlinearen supraleitenden Quantenschaltung gekoppelt ist, um den zweiten Modus anzutreiben, und eine Last umfasst, die im Wesentlichen nur mit dem zweiten Modus gekoppelt ist, wobei die Vorrichtung so konfiguriert ist, dass sie das Verfahren nach den Ansprüchen 1 bis 6 durchführt.

## Revendications

1. Procédé de mesure quantique pour un dispositif comprenant un circuit quantique supraconducteur non linéaire (100, 600, 700, 800) ayant un premier mode et un deuxième mode ayant chacun une fréquence de résonance respective et une représentation symbolique qui comprend au moins une boucle (610, 710, 810) qui inclut une ou plusieurs jonctions Josephson (601, 701, 801-802),

ledit circuit quantique supraconducteur non linéaire étant configuré de sorte que, lorsqu'un courant prédéterminé d'une intensité constante est appliqué, la fréquence de résonance du deuxième mode est sensiblement 2N fois la fréquence de résonance du premier mode, une différence de phase est induite à travers les une ou plusieurs jonctions Josephson (601, 701, 801-802), de sorte que le circuit quantique supraconducteur non linéaire présente un Hamiltonien extensible en une somme entre au moins un terme dominant de la forme

$\hbar g_{2N} a^{2N} b^\dagger + \hbar g_{2N}^* a^{\dagger 2N} b$ et une série de termes subsidiaires, où $g_{2N}$ est un scalaire correspondant à la force de couplage intrinsèque, *a* est l'opérateur d'annihilation du premier mode, *b* est l'opérateur d'annihilation du deuxième mode, et $\hbar$ est la constante de Planck réduite, réalisant ainsi intrinsèquement un échange de 2N-à-1 photons résonants entre respectivement le premier mode et le deuxième mode, N étant un nombre entier positif, et

ledit dispositif comprenant en outre une source de courant configurée pour fournir ledit courant prédéterminé d'une intensité constante, une source de micro-ondes configurée pour appliquer un rayonnement micro-ondes à une fréquence sensiblement égale à la fréquence de résonance du deuxième mode ou 2N fois la fréquence de résonance du premier mode et couplée audit circuit quantique supraconducteur non linéaire pour entraîner ledit deuxième mode, et une charge couplée sensiblement uniquement audit deuxième mode,
le procédé comprenant les opérations suivantes :

1) l'arrêt de l'entraînement dudit deuxième mode,

2) une pause d'une durée comprise entre $\left[\dfrac{1}{\kappa_{2N}} \; ; \; \dfrac{10}{\kappa_{2N}}\right]$ s, où $\kappa_{2N}$ est le taux de dissipation de 2N photons dudit circuit supraconducteur non linéaire en rad.s$^{-1}$,

3) la réalisation d'une mesure quantique pour déterminer une propriété de la distribution de nombre de photons sur le premier mode du circuit.

2. Procédé de mesure quantique selon la revendication 1, dans lequel l'opération 1) comprend l'application d'une forme d'impulsion carrée pour amener l'entraînement d'amplitude de sa valeur de stabilisation nominale à 0.

3. Procédé de mesure quantique selon la revendication 1, dans lequel l'opération 1) comprend l'application de deux formes d'impulsion carrées consécutives, la première amenant ledit entraînement d'amplitude de sa valeur de stabilisation nominale à une valeur négative sensiblement égale ou supérieure à la valeur absolue de stabilisation nominale, et la seconde amenant le courant de cette valeur à 0.

4. Mesure quantique selon l'une des revendications précédentes, dans laquelle l'opération 3) est une mesure quantique de non-démolition, et comprenant en outre l'opération suivante :
4) la restauration de l'entraînement dudit deuxième mode après que l'opération 3) est réalisée.

5. Procédé de mesure quantique selon la revendication 4, dans lequel l'opération 4) comprend l'application d'une forme d'impulsion carrée pour amener l'entraînement d'amplitude de 0 à la valeur de stabilisation nominale.

6. Procédé de mesure quantique selon la revendication 4, dans lequel l'opération 4) comprend l'application de deux formes d'impulsion carrées consécutives, la première amenant ledit entraînement d'amplitude de 0 à une valeur sensiblement comprise entre une et dix fois la valeur de stabilisation nominale, et la seconde amenant l'entraînement d'amplitude de cette valeur à la valeur de stabilisation nominale.

7. Procédé selon l'une des revendications précédentes, comprenant en outre l'opération suivante :
0) l'application sur le premier mode d'une impulsion électromagnétique ayant une fréquence sensiblement égale à la fréquence de résonance du premier mode qui a une amplitude supérieure à $\kappa_{2N}$ et une durée inférieure à $1/\kappa_{2N}$.

8. Procédé selon la revendication 7, dans lequel l'opération 0) est réalisée avant l'opération 1).

9. Procédé selon la revendication 7, dans lequel l'opération 0) et l'opération 1) sont réalisées simultanément.

10. Procédé de tomographie quantique, comprenant les opérations suivantes :

a) l'obtention d'un ensemble de déplacements complexes définissant une amplitude de déplacement et une phase de déplacement balayant l'espace de phase du mode qubit de chat,
b) la préparation d'un état dans le mode qubit de chat sur la base d'un ensemble choisi de paramètres pour le fonctionnement d'un dispositif comprenant un circuit quantique supraconducteur non linéaire (100, 600, 700, 800) ayant un premier mode et un deuxième mode ayant chacun une fréquence de résonance respective et une représentation symbolique qui comprend au moins une boucle (610, 710, 810) qui inclut une ou plusieurs jonctions Josephson (601, 701, 801-802),

ledit circuit quantique supraconducteur non linéaire étant configuré de sorte que, lorsqu'un courant prédéterminé d'une intensité constante est appliqué, la fréquence de résonance du deuxième mode est sensiblement 2N fois la fréquence de résonance du premier mode, une différence de phase est induite à travers les une ou plusieurs jonctions Josephson (601, 701, 801-802), de sorte que le circuit quantique supraconducteur non linéaire présente un Hamiltonien extensible en une somme entre au moins un terme dominant de la forme $\hbar g_{2N} a^{2N} b^{\dagger} + \hbar g_{2N}^{*} a^{\dagger 2N} b$ et une série de termes subsidiaires, où $g_{2N}$ est un scalaire correspondant à la force de couplage intrinsèque, $a$ est l'opérateur d'annihilation du premier mode, $b$ est l'opérateur d'annihilation du deuxième mode, et $\hbar$ est la constante de Planck réduite, réalisant ainsi intrinsèquement un échange de 2N-à-1 photons résonants entre respectivement le premier mode et le deuxième mode, N étant un nombre entier positif, et

ledit dispositif comprenant en outre une source de courant configurée pour fournir ledit courant prédéterminé d'une intensité constante, une source de micro-ondes configurée pour appliquer un rayonnement micro-ondes à une fréquence sensiblement égale à la fréquence de résonance du deuxième mode ou 2N fois la fréquence de résonance du premier mode et couplée audit circuit quantique supraconducteur non linéaire pour entraîner ledit deuxième mode, et une charge couplée sensiblement uniquement audit deuxième mode,

c) pour un déplacement complexe donné dans l'ensemble de déplacements complexes, l'application du procédé de l'une des revendications 7 à 9 en utilisant l'amplitude de déplacement et la phase de déplacement associées pour définir l'amplitude, la durée et la phase de l'impulsion électromagnétique de l'étape 0),
d) la répétition de l'opération b) et de l'opération c) avec un déplacement complexe différent.

11. Procédé de réglage de fonctionnement de dispositif quantique comprenant :

a) l'obtention d'une pluralité d'ensembles de paramètres pour le fonctionnement d'un dispositif quantique,
b) pour chaque ensemble de paramètres d'opération a), la réalisation du procédé de la revendication 10, et
c) la dérivation d'un ensemble réglé de paramètres sur la base des résultats de l'opération b).

12. Dispositif informatique quantique comprenant un circuit quantique supraconducteur non linéaire (100, 600, 700, 800) ayant un premier mode et un deuxième mode ayant chacun une fréquence de résonance respective et une représentation symbolique qui comprend au moins une boucle (610, 710, 810) qui inclut une ou plusieurs jonctions Josephson (601, 701, 801-802),

ledit circuit quantique supraconducteur non linéaire étant configuré de sorte que, lorsqu'un courant prédéterminé d'une intensité constante est appliqué, la fréquence de résonance du deuxième mode est sensiblement 2N fois la fréquence de résonance du premier mode, une différence de phase est induite à travers les une ou plusieurs jonctions Josephson (601, 701, 801-802), de sorte que le circuit quantique supraconducteur non linéaire présente un Hamiltonien extensible en une somme entre au moins un terme dominant de la forme

$$\hbar g_{2N} a^{2N} b^\dagger + \hbar g_{2N}^* a^{\dagger 2N} b$$

et une série de termes subsidiaires, où $g_{2N}$ est un scalaire correspondant à la force de couplage intrinsèque, $a$ est l'opérateur d'annihilation du premier mode, b est l'opérateur d'annihilation du deuxième mode, et $\hbar$ est la constante de Planck réduite, réalisant ainsi intrinsèquement un échange de 2N-à-1 photons résonants entre respectivement le premier mode et le deuxième mode, N étant un nombre entier positif, et

ledit dispositif comprenant en outre une source de courant configurée pour fournir ledit courant prédéterminé d'une intensité constante, une source de micro-ondes configurée pour appliquer un rayonnement micro-ondes à une fréquence sensiblement égale à la fréquence de résonance du deuxième mode ou 2N fois la fréquence de résonance du premier mode et couplée audit circuit quantique supraconducteur non linéaire pour entraîner ledit deuxième mode, et une charge couplée sensiblement uniquement audit deuxième mode,
dans lequel ledit dispositif est configuré pour fonctionner à l'aide d'un ensemble réglé de paramètres déterminés par le procédé de la revendication 11.

13. Dispositif informatique quantique comprenant un circuit quantique supraconducteur non linéaire (100, 600, 700, 800) ayant un premier mode et un deuxième mode ayant chacun une fréquence de résonance respective et une représentation symbolique qui comprend au moins une boucle (610, 710, 810) qui inclut une ou plusieurs jonctions Josephson (601, 701, 801-802),

ledit circuit quantique supraconducteur non linéaire étant configuré de sorte que, lorsqu'un courant prédéterminé d'une intensité constante est appliqué, la fréquence de résonance du deuxième mode est sensiblement 2N fois la fréquence de résonance du premier mode, une différence de phase est induite à travers les une ou plusieurs jonctions Josephson (601, 701, 801-802), de sorte que le circuit quantique supraconducteur non linéaire présente un Hamiltonien extensible en une somme entre au moins un terme dominant de la forme

$$\hbar g_{2N} a^{2N} b^\dagger + \hbar g_{2N}^* a^{\dagger 2N} b$$

et une série de termes subsidiaires, où $g_{2N}$ est un scalaire correspondant à la force de couplage intrinsèque, $a$ est l'opérateur d'annihilation du premier mode, $b$ est l'opérateur d'annihilation du deuxième mode, et $\hbar$ est la constante de Planck réduite, réalisant ainsi intrinsèquement un échange de 2N-à-1 photons résonants entre respectivement le premier mode et le deuxième mode, N étant un nombre entier positif, et

ledit dispositif comprenant en outre une source de courant configurée pour fournir ledit courant prédéterminé d'une intensité constante, une source de micro-ondes configurée pour appliquer un rayonnement micro-ondes à une fréquence sensiblement égale à la fréquence de résonance du deuxième mode ou 2N fois la fréquence de résonance du premier mode et couplée audit circuit quantique supraconducteur non linéaire pour entraîner ledit deuxième mode, et une charge couplée sensiblement uniquement audit deuxième mode,

dans lequel ledit dispositif est configuré pour réaliser le procédé des revendications 1 à 6.

FIG. 1

FIG. 2

FIG. 3

FIG. 4a          FIG. 4b

FIG. 5

FIG. 6

FIG. 7

FIG. 8

FIG. 9

Turn off drive —1000

Pause —1010

Measure —1020

Restore drive —1030

**FIG. 10**

1300

Turn off drive → Displace —1340

Pause —1310

Measure —1320

**FIG. 13**

**FIG. 12**

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21306965

**Non-patent literature cited in the description**

- **GAUTIER R. et al.** Combined Dissipative and Hamiltonian Confinement of Cat Qubits. *PRX Quantum*, 2021
- **LESCANNE R.** Exponential suppression of bit-flips in a qubit encoded in an oscillator. *Nature Physics*, 2020
- **TOUZARD S.** Coherent Oscillations inside a Quantum Manifold Stabilized by Dissipation. *Physical Review X*, 2018
- **LEGHTAS Z.** Confining the state of light to a quantum manifold by engineered two-photon loss. *Science*, 2015
- **SUN, L.** ; **PETRENKO, A.** ; **LEGHTAS, Z. et al.** Tracking photon jumps with repeated quantum non-demolition parity measurements. *Nature*, 2014, vol. 511, 444-448, https://doi.org/10.1038/nature13436
- **GRIMM, A.** ; **FRATTINI, N.E.** ; **PURI, S. et al.** Stabilization and operation of a Kerr-cat qubit. *Nature*, 2020, vol. 584, 205-209, https://doi.org/10.1038/s41586-020-2587-z
- **ESSIG A.** ; **FICHEUX Q. et al.** Multiplexed photon number measurement. *Physical. Review X*, 27 August 2025, vol. 11, 031045
- **CAMPAGNE-IBARCQ, P.** ; **EICKBUSCH, A.** ; **TOUZARD, S. et al.** Quantum error correction of a qubit encoded in grid states of an oscillator. *Nature*, 2020, vol. 584, 368-372, https://doi.org/10.1038/s41586-020-2603-3
- **S. TOUZARD** ; **A. KOU** ; **N. E. FRATTINI et al.** Gated Conditional Displacement Readout of Superconducting Qubits. *Phys. Rev. Lett.*, vol. 122, 080502
- **HOFHEINZ, M.** ; **WEIG, E.** ; **ANSMANN, M. et al.** Generation of Fock states in a superconducting quantum circuit. *Nature*, 2008, vol. 454, 310-314, https://doi.org/10.1038/nature07136
- **WALLRAFF, A.** ; **SCHUSTER, D.** ; **BLAIS, A. et al.** Strong coupling of a single photon to a superconducting qubit using circuit quantum electrodynamics. *Nature*, 2004, vol. 431, 162-167, https://doi.org/10.1038/nature02851
- **MIRRAHIMI M. et al.** Dynamically protected cat-qubits: a new paradigm for universal quantum computation. *New J. Phys.*, 2014, vol. 16, 045014